# EUROPÄISCHE PATENTSCHRIFT

(11) **EP 4 272 542 B1**
(45) Veröffentlichungstag und Bekanntmachung des Hinweises auf die Patenterteilung: **29.07.2026**
(21) Anmeldenummer: 23169345.8
(22) Anmeldetag: 24.04.2023
(51) Int. Cl.: A01F 15/08

(54) **KOMBINATION UND VERFAHREN ZUM BETREIBEN EINER KOMBINATION**
COMBINATION AND METHOD FOR OPERATING A COMBINATION
COMBINAISON ET PROCÉDÉ DE FONCTIONNEMENT D'UNE COMBINAISON

(30) Priorität: 04.05.2022 DE 102022111005; 04.05.2022 DE 102022111006
(43) Veröffentlichungstag der Anmeldung: 08.11.2023
(73) Patentinhaber: Deere & Company, Moline, IL 61265 (US)
(72) Erfinder: OSTERMANN, PHILIPPE, 68163 Mannheim (DE); DOMMANGE, PIERRE, 68163 Mannheim (DE); JUNG, BENEDIKT, 68163 Mannheim (DE)
(74) Vertreter: Stein, Stefan

(56) Entgegenhaltungen:
- EP-A1- 1 683 407
- EP-A2- 1 813 146
- EP-B1- 2 526 759

## Beschreibung

Die Erfindung betrifft ein Verfahren zum Betrieb einer Kombination aus einem Zugfahrzeug und einer Ballenpresse gemäss dem Oberbegriff des unabhängigen Anspruchs 1 und eine Kombination aus einem Zugfahrzeug und einer Ballenpresse gemäss dem Oberbegriff des unabhängigen Anspruchs 15.

Ballenpressen, insbesondere Rundballenpressen, werden zum Aufnehmen und Pressen von landwirtschaftlichem Erntegut, beispielsweise Stroh, Heu oder dergleichen eingesetzt. Dabei wird das auf dem Boden liegende Erntegut mit einer Aufnahmeeinheit, insbesondere einer Pick-up, aufgenommen. Das aufgenommene Erntegut wird mit einer Fördereinheit, beispielsweise einem Rotor oder einem Fördereinheit, in eine Ballenpresskammer mit einem oder mehreren Pressmitteln geleitet. Die Fördereinheit kann als Teil der Aufnahmeeinheit ausgebildet sein oder der Aufnahmeeinheit nachgeordnet sein, insbesondere in Förderrichtung nachgeordnet sein. In der Ballenpresskammer wird der Ballen, insbesondere der Rundballen, geformt. Der fertig geformte Ballen wird im Anschluss in der Ballenpresskammer mit einem Wickelmaterial, beispielsweise Netz, Folie oder Bindegarn, umwickelt und kann vorzugsweise über eine Auswurfklappe oder ein Heckteil der Ballenpresse, insbesondere über die mit einer Auswurfklappe oder einem Heckteil versehene Ballenpresskammer entladen werden. Um den Ballen jedoch binden bzw. umwickeln zu können, ist es notwendig, die Erntegutzufuhr zur Ballenpresskammer zu stoppen, was bei gewöhnlichen Ballenpressen nur durch eine Unterbrechung der Erntegutaufnahme möglich ist. Dieses bedeutet, dass der Fahrer der Kombination kontinuierlich den Pressvorgang bzw. die von der Ballenpresse bereitgestellten Parameter, wie beispielsweise die Ballengröße verfolgen muss, um dementsprechend mit dem Zugfahrzeug anzuhalten bzw. anzufahren. In der EP 1 813 146 A2 wird vorgeschlagen, dieses Problem durch eine Verbindung von einer mit einem Ballensensor, also einem Sensor zu Erfassung der Grösse des Ballens, verbundenen Ballenpressensteuereinheit zu einer Zugfahrzeugsteuereinheit zu lösen, welche bei einer zuvor bestimmten Grösse des Ballens ein Haltesignal übermittelt, so dass das Zugfahrzeug stoppt oder anhält, insbesondere automatisch stoppt oder anhält. Die automatische Steuerung und/oder Regelung dieses Vorgangs stellt dabei eine Entlastung des Fahrers dar. Die EP 2 526 759 B1 offenbart eine Anpassung der Drehzahl einer Antriebswelle der Ballenpresse, um die Haltezeiten des Zugfahrzeugs zu verkürzen. Dabei wird der Zugfahrzeugsteuereinheit von der Ballenpressensteuereinheit ein Drehzahl-Sollwertsignal in Abhängigkeit von den verschiedenen Wickelphasen in der Ballenpresskammer der Ballenpresse bereitgestellt, worauf eine Anpassung der Drehzahl der Antriebswelle der Ballenpresse mittels der Zugfahrzeugsteuereinheit erfolgt. Die EP 1 813 146 A2 offenbart eine Kombination aus einem Zugfahrzeug und einer Ballenpresse.

Nachteilig hierbei ist die langen Haltezeiten der Kombination, da in allen Wickelphasen kein Erntegut gepresst werden kann. Weiter nachteilig ist, dass die Anpassung der Antriebsdrehzahl der Antriebswelle an den Wickelvorgang, insbesondere die Wickelphasen, gekoppelt ist, was zu einem Zeitverlust beim Wickelvorgang führt.

Der vorliegenden Erfindung liegt daher die Aufgabe zugrunde, Verfahren zum Betrieb einer Kombination aus einem Zugfahrzeug und einer Ballenpresse und eine Kombination aus einem Zugfahrzeug und einer Ballenpresse vorzuschlagen, durch welche die vorgenannten Probleme überwunden werden. Insbesondere sollen ein Verfahren und eine Kombination vorgeschlagen werden, welche die Arbeitsvorgänge der Kombination unter technischen und/oder wirtschaftlichen und/oder zeitlichen Gesichtspunkten verbessert.

Diese Aufgabe wird durch ein Verfahren zum Betrieb einer Kombination aus einem Zugfahrzeug und einer Ballenpresse mit den Merkmalen des Anspruchs 1 und eine Kombination aus einem Zugfahrzeug und einer Ballenpresse mit den Merkmalen des Anspruchs 15 gelöst. Die abhängigen Ansprüche beziehen sich auf besonders vorteilhafte Ausführungsformen der Erfindung.

Erfindungsgemäß wird ein Verfahren zum Betrieb einer Kombination aus einem Zugfahrzeug und einer Ballenpresse vorgeschlagen. Die Kombination umfasst eine Ein- und Ausgabeeinheit und eine Zugfahrzeugsteuereinheit und eine Ballenpressensteuereinheit, wobei die Zugfahrzeugsteuereinheit mit der Ein- und Ausgabeeinheit und der Ballenpressensteuereinheit verbunden ist, insbesondere signalverbunden ist. Die Ballenpresse ist mit dem Zugfahrzeug verbunden, und/oder insbesondere gekoppelt. Das Zugfahrzeug umfasst einen Antriebsmotor, welcher mit einer Antriebswelle der Ballenpresse verbunden ist, bevorzugt antreibbar verbunden und/oder mechanisch gekoppelt ist. Die Ballenpresse umfasst,
- eine Aufnahmeeinheit zur Aufnahme von Erntegut
- und eine Ballenpresskammer, um das aufgenommene Erntegut zu einem Ballen zu pressen, insbesondere zu einem Rundballen zu pressen.

Mittels oder mit der Ein- und Ausgabeeinheit wird ein Anpassungssignal generiert, insbesondere erzeugt, und an die Zugfahrzeugsteuereinheit gesendet. Das Anpassungssignal kann von einer oder durch eine Bedienperson der Kombination generiert werden. Das Anpassungssignal kann insbesondere mit einer Eingabe, beispielsweise durch Drücken einer Taste oder einer Schaltfläche oder einen Sprachbefehl, durch die Bedienperson in die Ein- und Ausgabeeinheit generiert werden. Die Ein- und Ausgabeeinheit kann das Anpassungssignal an die Zugfahrzeugsteuereinheit senden, insbesondere direkt nachdem das Anpassungssignal generiert wurde. Das Anpassungssignal kann aber auch von der Ein- und Ausgabeeinheit generiert werden, beispielsweise wenn die Ein- und Ausgabeeinheit ein anderes Signal empfängt. Mit anderen Worten, die Ein- und Ausgabeeinheit ist derart betreibbar, dass die Ein- und Ausgabeeinheit das Anpassungssignal generiert und der Zugfahrzeugsteuereinheit sendet. Die Zugfahrzeugsteuereinheit passt, insbesondere automatisch, eine Antriebsdrehzahl der Antriebswelle der Ballenpresse an, wenn die Zugfahrzeugsteuereinheit das Anpassungssignal empfängt. Mit anderen Worten, die Zugfahrzeugsteuereinheit kann dahingehend betreibbar sein, eine Antriebsdrehzahl der Antriebswelle der Ballenpresse anzupassen. Ausserdem kann die Antriebsdrehzahl der Antriebswelle mit der Zugfahrzeugsteuereinheit in einer Haltephase der Kombination angepasst werden. Die Haltephase ist die Phase vor Beginn des Wickelvorgangs bzw. der Wickelphase. Unter dem verwendeten Ausdruck "eine Antriebsdrehzahl der Antriebswelle der Ballenpresse anpassen" soll in diesem Zusammenhang kein Einund Ausschalten der Antriebswelle, sondern vielmehr eine Erhöhung bzw. eine Verringerung der Antriebsdrehzahl der Antriebswelle verstanden werden.

Das Zugfahrzeug kann ein landwirtschaftliches Zugfahrzeug sein, insbesondere ein Traktor oder ein Schlepper. Das Zugfahrzeug kann in eine Fahrtrichtung vor der Ballenpresse angeordnet sein. Das Zugfahrzeug kann die Ballenpresse ziehen. Das Zugfahrzeug kann ausserdem Lenkmittel zum Lenken des Zugfahrzeugs umfassen. Das Zugfahrzeug kann vom Antriebsmotor angetrieben werden. Ausserdem ist der Antriebsmotor mit der Antriebswelle verbunden, insbesondere mechanisch gekoppelt. Die Antriebswelle kann vom Antriebsmotor angetrieben werden. Dadurch kann der Antriebsmotor über die Antriebswelle eine Drehzahl und/oder ein Drehmoment an die Ballenpresse übertragen werden. Mit der Antriebswelle können die Ballenpresskammer und/oder eine Wickelvorrichtung und/oder die Aufnahmeeinheit und/oder eine Fördereinheit angetrieben werden, insbesondere die Drehzahl und/oder das Drehmoment auf diese übertragen werden. Die Ballenpresse kann über die Antriebswelle und/oder über eine Zugvorrichtung, beispielsweise eine Deichsel und/oder eine Kupplung, mit dem Zugfahrzeug verbunden, insbesondere gekoppelt sein. Beispielsweise kann ein Zugfahrzeugrahmen des Zugfahrzeugs über die oder mit der Zugvorrichtung mit einem Ballenpressenrahmen der Ballenpresse verbunden sein. Das Zugfahrzeug kann den Zugfahrzeugrahmen umfassen. Ausserdem kann das Zugfahrzeug eines oder mehrere Bodeneingriffsmittel umfassen. Die Bodeneingriffsmittel können das Zugfahrzeug auf dem Boden abstützen und/oder tragen. Die Bodeneingriffsmittel können Räder oder Raupen sein. Die Bodeneingriffsmittel können direkt oder über einen Antriebsstrang mit dem Antriebsmotor verbunden, insbesondere mechanisch gekoppelt sein. Die Bodeneingriffsmittel können direkt oder über den Antriebsstrang mit dem Antriebsmotor angetrieben werden, sodass das Zugfahrzeug beispielsweise in einer Vorwärts- und/oder Rückwärtsrichtung über ein Feld angetrieben wird. Unter mechanisch gekoppelt kann eine antreibbare Verbindung und/oder eine mechanische Kopplung, von zwei Komponenten der Kombination verstanden werden, die es ermöglicht, eine Kraft beziehungsweise ein Moment, insbesondere ein Drehmoment, von der einen Komponente auf die andere auf mechanischem Weg zu übertragen. Zwischen den zwei Komponenten können dabei weitere Komponenten vorgesehen sein, die solch eine Kraft- beziehungsweise Momentübertragung, insbesondere Drehmomentübertragung, zwischen den zwei Komponenten ermöglichen. Die Zugfahrzeugsteuereinheit kann den Antriebsmotor und/oder den Antriebsstrang, der insbesondere einen Getriebeblock umfassen kann, und/oder die Bodeneingriffsmittel einstellen und/oder verstellen, insbesondere steuern und/oder regeln. Die Zugfahrzeugsteuereinheit kann die Antriebsdrehzahl der Antriebswelle der Ballenpresse anpassen, beispielsweise indem die Zugfahrzeugsteuereinheit den Antriebsstrang oder den Getriebeblock veranlasst, deren Drehzahl und somit die Antriebsdrehzahl der Antriebswelle anzupassen.

Die Ballenpresse kann eine Quaderballenpresse oder eine Rundballenpresse zum Bilden von Rundballen aus Erntegut sein. Die Ballenpresse kann den Ballenpressenrahmen umfassen. Ebenso kann die Ballenpresse in das Zugfahrzeug integriert sein, also die Kombination als selbstfahrende Ballenpresse ausgebildet sein. Die Ballenpresskammer kann von der Aufnahmeeinheit aufgenommenes Erntegut zu einem Ballen, insbesondere zu einem Rundballen pressen. Die Ballenpresse kann mit einer größenveränderlichen Ballenpresskammer bzw. als Ballenpresse mit variabler Ballenpresskammer ausgebildet sein. Die Ballenpresse mit größenveränderlichen Ballenpresskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Ballenpresskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen in der Ballenpresskammer kann einer Zylinderform entsprechen, sodass die Pressrollen zylindrisch um den Rundballen angeordnet sind und eine zylindrische Umfangsfläche ausbilden. Die Ballenpresskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Ballenpresskammer kann ebenfalls am Ballenpressenrahmen angeordnet, bevorzugt mit diesem verbunden und/oder an diesem befestigt sein. Die Ballenpressensteuereinheit kann an der Ballenpresse oder am Zugfahrzeug angeordnet sein.

Wesentlich für die Erfindung ist, dass durch das erfindungsgemäße Verfahren mit geringem Aufwand die Anpassung der Antriebsdrehzahl der Antriebswelle mit oder durch die Ein- und Ausgabeeinheit ermöglicht wird. Die Zugfahrzeugsteuereinheit kann die Antriebsdrehzahl der Antriebswelle, insbesondere mit einem Bedienereingriff an der Ein- und Ausgabeeinheit, anpassen. Mit anderen Worten, mit der Erfindung wird ein Verfahren bereitgestellt, das es der Bedienperson jederzeit ermöglicht die Antriebsdrehzahl anzupassen. Wesentlicher Vorteil der erfindungsgemässen Kombination ist die Zeiteinsparung durch das Anpassen der Antriebsdrehzahl der Antriebswelle. Vorteilhafterweise kann so, bevorzugt vor dem Beginn oder Start des Binde- oder Wickelvorgangs und/oder unabhängig vom Binde- oder Wickelvorgang, die Antriebsdrehzahl der Antriebswelle jederzeit angepasst werden und so der nachfolgende Wickelvorgang beschleunigt werden.

In Ausgestaltung der Erfindung umfasst die Ballenpresse einen Ballensensor, wobei mit dem Ballensensor eine Grösse eines Ballens in der Ballenpresskammer erfasst wird, beispielsweise detektiert wird. Die Ballenpressensteuereinheit ist mit dem Ballensensor verbunden, insbesondere signalverbunden. Die Ballenpressensteuereinheit kann die Grösse des Ballens also in Form eines Ballensignals vom Ballensensor empfangen. Der Ballensensor kann derart an oder in der Ballenpresskammer angeordnet sein, dass der Ballensensor ein Grösse das Ballens, also eine Ballengrösse erfassen kann. Der Ballensensor kann auch der Ballenpresskammer zugeordnet sein, insbesondere an oder in- oder ausserhalb der Ballenpresskammer angeordnet und/oder befestigt sein. Der Ballensensor kann eine Grösse des Ballens in der Ballenpresskammer erfassen und insbesondere in das Ballensignal umformen. Das Ballensignal kann dabei also repräsentativ für die Grösse des Ballens in der Ballenpresskammer sein, beispielsweise kann der Ballensensor den Abstand zur Ballenoberfläche bzw. zu dem an der Ballenoberfläche anliegendem Pressmittel erfassen. Der Ballensensor kann so Auskunft über die Grösse des Ballens geben, insbesondere den Ballendurchmesser an der jeweiligen Stelle entlang der Ballenbreite geben. Der Ballensensor kann das Ballensignal an die Ballenpressensteuereinheit senden. Die Ballenpressensteuereinheit kann das Ballensignal vom Ballensensor empfangen. Die Ballenpressensteuereinheit kann anhand des Ballensignals oder mit dem Ballensignal bestimmen und/oder ermitteln, insbesondere berechnen und/oder vergleichen, ob welche Grösse ein Ballen erreicht hat, insbesondere ob ein Ballen grösser oder gleich einer bestimmten Grösse des Ballens ist.

In Ausgestaltung der Erfindung sendet die Ballenpressensteuereinheit der Ein- und Ausgabeeinheit, insbesondere auch über die oder an die Zugfahrzeugsteuereinheit, das Ballensignal. Die Ein- und Ausgabeeinheit zeigt anhand oder mit dem empfangenen Ballensignal die Grösse des Ballens, insbesondere die aktuelle Grösse des Ballens an. Das Anpassungssignal wird mittels oder mit der Ein- und Ausgabeeinheit in Abhängigkeit von der angezeigten Grösse des Ballens generiert und an die Zugfahrzeugsteuereinheit gesendet. Das Anpassungssignal kann von einer oder durch eine Bedienperson der Kombination generiert werden. Das Anpassungssignal kann insbesondere mit einer Eingabe, beispielsweise durch Drücken einer Taste oder einer Schaltfläche oder einen Sprachbefehl, durch die Bedienperson in die Ein- und Ausgabeeinheit generiert werden, wenn die Bedienperson der Auffassung ist, dass die angezeigte Grösse des Ballens ausreichend ist. Mit anderen Worten, die Ein- und Ausgabeeinheit ist derart betreibbar, dass die Ein- und Ausgabeeinheit das Anpassungssignal in Abhängigkeit von der angezeigten Grösse des Ballens generiert und der Zugfahrzeugsteuereinheit sendet. Die Zugfahrzeugsteuereinheit kann also die Antriebsdrehzahl der Antriebswelle insbesondere mit einem Bedienereingriff an der Ein- und Ausgabeeinheit in Abhängigkeit von der angezeigten Grösse des Ballens anpassen. Mit anderen Worten, mit der Erfindung wird ein Verfahren bereitgestellt, das es der Bedienperson ermöglicht die Antriebsdrehzahl in Abhängigkeit von der angezeigten Grösse des Ballens anzupassen. Wesentlicher Vorteil der erfindungsgemässen Kombination ist die Zeiteinsparung durch das Anpassen der Antriebsdrehzahl der Antriebswelle in Abhängigkeit von der angezeigten Grösse des Ballens. Vorteilhafterweise kann so, bevorzugt vor dem Beginn oder Start des Binde- oder Wickelvorgangs und/oder unabhängig vom Binde- oder Wickelvorgang, die Antriebsdrehzahl der Antriebswelle jederzeit angepasst werden.

In Ausgestaltung der Erfindung sendet die Ballenpressensteuereinheit der Zugfahrzeugsteuereinheit und/oder der Ein- und Ausgabeeinheit, insbesondere über die Zugfahrzeugsteuereinheit an die Ein- und Ausgabeeinheit, ein Haltesignal, wenn das Ballensignal des Ballensensors anzeigt, dass ein Ballen eine Grösse erreicht hat, die grösser oder gleich einer ersten vorbestimmten Grösse ist. Das Haltesignal kann anzeigen, dass kein zusätzliches Erntegut in die Ballenpresskammer eingeführt werden kann. Die Zugfahrzeugsteuereinheit zeigt, insbesondere der Bedienperson, das Haltesignal an und/oder das Haltesignal wird, insbesondere der Bedienperson, mit der Ein- und Ausgabeeinheit angezeigt. Das Anpassungssignal wird mittels oder mit der Ein- und Ausgabeeinheit in Abhängigkeit vom Haltesignal generiert und an die Zugfahrzeugsteuereinheit gesendet. Das Anpassungssignal kann mittels oder mit der Ein- und Ausgabeeinheit von einer oder durch eine Bedienperson der Kombination in Abhängigkeit vom Haltesignal generiert und gesendet werden. Unter in Abhängigkeit vom Haltesignal generiert und gesendet werden, kann insbesondere verstanden werden, dass das Anpassungssignal generiert und gesendet wird, wenn das Haltesignal angezeigt wird. Das Anpassungssignal kann mit einer Eingabe, beispielsweise durch Drücken einer Taste oder einer Schaltfläche oder einen Sprachbefehl, von oder durch die Bedienperson generiert und an die Zugfahrzeugsteuereinheit gesendet werden, wenn der Bedienperson das Haltesignal angezeigt wird. Ebenso kann aber auch die Ein- und Ausgabeeinheit das Anpassungssignal, insbesondere automatisch, generieren, wenn die Ein- und Ausgabeeinheit das Haltesignal empfängt und die Bedienperson das Anpassungssignal mit einer Eingabe an die Zugfahrzeugsteuereinheit senden, wenn der Bedienperson das Haltesignal angezeigt wird. Ebenso kann aber auch die Ein- und Ausgabeeinheit das Anpassungssignal, insbesondere automatisch, generieren und an die Zugfahrzeugsteuereinheit senden, wenn die Ein- und Ausgabeeinheit das Haltesignal empfängt. Vorteilhafterweise kann so das Anpassungssignal manuell oder automatisch mit der Ein- und Ausgabeeinheit in Abhängigkeit vom Haltesignal generiert und an die Zugfahrzeugsteuereinheit gesendet werden. Die Ein- und Ausgabeeinheit kann also derart betreibbar sein, dass die Ein- und Ausgabeeinheit das Anpassungssignal in Abhängigkeit vom Haltesignal generiert und der Zugfahrzeugsteuereinheit sendet. Die Zugfahrzeugsteuereinheit kann, insbesondere der Bedienperson, das Haltesignal anzeigen, indem beispielsweise ein Signalton oder ein Alarmsignal ausgegeben wird. Ebenso kann das Haltesignal, insbesondere der Bedienperson, mit der Ein- und Ausgabeeinheit angezeigt werden, beispielsweise als eine Signalanzeige und/oder als Signalton. Mit anderen Worten, die Ballenpressensteuereinheit sendet der Zugfahrzeugsteuereinheit ein Haltesignal, wenn die Ballenpressensteuereinheit mit dem vom Ballensensor empfangenen Ballensignal bestimmt, insbesondere berechnet, dass ein Ballen eine Grösse erreicht hat, die grösser oder gleich der ersten vorbestimmten Grösse ist. Im Speziellen empfängt die Ballenpressensteuereinheit vom Ballensensor das Ballensignal. Die Ballenpressensteuereinheit kann anhand des Ballensignals oder mit dem Ballensignal bestimmen und/oder ermitteln, insbesondere berechnen und/oder vergleichen, ob ein Ballen eine Grösse erreicht hat, die grösser oder gleich der ersten vorbestimmten Grösse ist, also grösser oder gleich einer ersten vorbestimmten Ballengrösse ist. Wenn die Ballensteuereinheit feststellt, dass der Ballen eine Grösse erreicht hat, die grösser oder gleich der ersten vorbestimmten Grösse ist, sendet die Ballenpressensteuereinheit der Zugfahrzeugsteuereinheit und/oder der Ein- und Ausgabeeinheit das Haltesignal. Haltesignal und Ballensignal können dabei identische oder verschiedene Signale sein. Auf diese Weise wird die Arbeit mit der Kombination, insbesondere die Arbeit der Bedienperson mit der Kombination, erleichtert, da die Bedienperson weiss, dass, wenn die Zugfahrzeugsteuereinheit das Haltesignal anzeigt und/oder das Haltesignal mit der Ein- und Ausgabeeinheit angezeigt wird, der Ballen die gewünschte erste vorbestimmte Grösse aufweist. Daraufhin kann das Anpassungssignal manuell oder automatisch mit der Ein- und Ausgabeeinheit in Abhängigkeit vom Haltesignal generiert und/oder an die Zugfahrzeugsteuereinheit gesendet werden, sodass die Zugfahrzeugsteuereinheit die Antriebsdrehzahl der Antriebswelle anpasst, wenn die Zugfahrzeugsteuereinheit das Anpassungssignal empfängt. Ausserdem wird vorteilhafterweise die Produktion von Ballen, die größer als gewünscht sind, vermieden. Wesentlicher Vorteil der erfindungsgemässen Kombination ist die Zeiteinsparung durch das gleichzeitige das Anpassen der Antriebsdrehzahl der Antriebswelle in Abhängigkeit vom Haltesignal.

Vorteilhafterweise kann so die Antriebsdrehzahl vor dem Beginn oder Start des Bindeoder Wickelvorgangs oder der Wickelphase, also unabhängig vom Binde- oder Wickelvorgang, angepasst werden. Wesentlich und von Vorteil ist somit, dass die Anpassung der Antriebsdrehzahl der Antriebswelle vor dem Beginn oder Start des Binde- oder Wickelvorgangs oder der Wickelphase angepasst wird, da dadurch die dafür anfallende Zeit erheblich verkürzt wird.

In Ausgestaltung der Erfindung wird ein Bremsvorgang zum Stoppen der Kombination, insbesondere des Zugfahrzeugs, eingeleitet. Der Bremsvorgang kann eingeleitet werden vor oder nachdem das Anpassungssignal versendet wurde und/oder die Zugfahrzeugsteuereinheit das Haltesignal anzeigt und/oder das Haltesignal mit der Ein- und Ausgabeeinheit angezeigt wird. Ebenso kann der Bremsvorgang eingeleitet werden, wenn die Zugfahrzeugsteuereinheit das Anpassungssignal empfängt oder wenn die Zugfahrzeugsteuereinheit die Antriebsdrehzahl der Antriebswelle der Ballenpresse anpasst oder angepasst hat. Somit kann durch das Verfahren mit geringem Aufwand ein Halten der Kombination, insbesondere des Zugfahrzeugs, und eine Anpassung der Antriebsdrehzahl der Antriebswelle bei erreichter erster vorbestimmter Grösse des Ballens oder in Abhängigkeit von der angezeigten Grösse erreicht werden. Es wird also ein Bremsvorgang zum Stoppen oder Halten des Zugfahrzeugs eingeleitet und die Antriebsdrehzahl der Antriebswelle der Ballenpresse angepasst. Mit anderen Worten, vorteilhafterweise wird ein Verfahren für eine Kombination aus einem Zugfahrzeug und einer Ballenpresse bereitgestellt, wobei das Zugfahrzeug gebremst wird und/oder angehalten wird, insbesondere automatisch anhält, und, insbesondere automatisch, die Antriebsdrehzahl der Antriebswelle angepasst wird. Die kann, wie oben beschrieben in Abhängigkeit von der angezeigten Grösse oder in Abhängigkeit vom Haltesignal oder vom Generieren des Anpassungssignals oder Versenden des Anpassungssignals oder Empfang des Anpassungssignals durch die Zugfahrzeugsteuereinheit erfolgen. Unter automatisch kann verstanden werden, dass kein Bedienereingriff erforderlich ist. Auf diese Weise wird die Arbeit des Bedieners der Kombination erleichtert. Vorteil ist die Zeiteinsparung durch das gleichzeitige Anhalten der Kombination und das Anpassen der Antriebsdrehzahl der Antriebswelle. Vorteilhafterweise kann so in der Zeit, in der die Kombination angehalten bzw. gestoppt wird das Anpassen der Antriebsdrehzahl der Antriebswelle erfolgen, sodass die Antriebsdrehzahl vor dem Beginn oder Start des Binde- oder Wickelvorgangs oder der Wickelphase, also unabhängig vom Binde- oder Wickelvorgang, angepasst ist. Gleichzeitig wird durch das Anhalten des Zugfahrzeugs vorteilhafterweise vermieden, dass weiter Erntegut in die Ballenpresse aufgenommen wird. Von Vorteil ist somit, dass die Antriebsdrehzahl der Antriebswelle, insbesondere in der Haltephase, vor dem Beginn oder Start des Binde- oder Wickelvorgangs oder Wickelphase angepasst wird, da dadurch die für den Binde- oder Wickelvorgang anfallende Zeit erheblich verkürzt wird und zeitgleich mit dem Haltevorgang stattfindet.

In Ausgestaltung der Erfindung wird mit der Zugfahrzeugsteuereinheit eine Antriebsgeschwindigkeit des Zugfahrzeugs eingestellt und/oder verstellt, insbesondere gesteuert und/oder geregelt. Mit anderen Worten, die Zugfahrzeugsteuereinheit kann zur Einstellung und/oder Verstellung, insbesondere Steuerung und/oder Regelung, der Antriebsgeschwindigkeit des Zugfahrzeugs betreibbar sein. Im Speziellen kann die Zugfahrzeugsteuereinheit den Antriebsmotor und/oder den Antriebsstrang und/oder die Bodeneingriffsmittel einstellen und/oder verstellen, insbesondere steuern und/oder regeln. Bevorzug kann die Zugfahrzeugsteuereinheit die Antriebsgeschwindigkeit des Zugfahrzeugs mit dem Antriebsmotor und/oder dem Antriebsstrang und/oder den Bodeneingriffsmittel einstellen und/oder verstellen, insbesondere steuern und/oder regeln. Die Antriebsgeschwindigkeit kann dabei die Geschwindigkeit sein, mit der sich die Kombination, insbesondere das Zugfahrzeug bewegt.

In Ausgestaltung der Erfindung leitet die Zugfahrzeugsteuereinheit einen Bremsvorgang zum Stoppen des Zugfahrzeugs ein, wenn die Zugfahrzeugsteuereinheit das Anpassungssignal von der Ein- und Ausgabeeinheit empfängt. Ebenso leitet die Zugfahrzeugsteuereinheit einen Bremsvorgang zum Stoppen des Zugfahrzeugs, insbesondere der Kombination, ein und/oder passt eine Antriebsdrehzahl der Antriebswelle der Ballenpresse an, wenn die Zugfahrzeugsteuereinheit das Anpassungssignal von der Ein- und Ausgabeeinheit und die Zugfahrzeugsteuereinheit und/oder die Ein- und Ausgabeeinheit das Haltesignal von der Ballenpressensteuereinheit empfangen. Die Zugfahrzeugsteuereinheit kann die Kombination, insbesondere das Zugfahrzeug, bremsen und/oder anhalten, wenn die Zugfahrzeugsteuereinheit das Anpassungssignal empfängt und/oder die Zugfahrzeugsteuereinheit und/oder die Ein- und Ausgabeeinheit das Haltesignal von der Ballenpressensteuereinheit empfangen, indem die Zugfahrzeugsteuereinheit die Antriebsgeschwindigkeit des Zugfahrzeugs auf 0 km/h einstellt und/oder verstellt, insbesondere steuert und/oder regelt. Dazu kann die Zugfahrzeugsteuereinheit die Kombination, insbesondere das Zugfahrzeug, die Antriebsgeschwindigkeit des Zugfahrzeugs mit dem Antriebsmotor und/oder dem Antriebsstrang und/oder den Bodeneingriffsmittel einstellen und/oder verstellen, insbesondere steuern und/oder regeln. Mit der Zugfahrzeugsteuereinheit kann in einer Ballenpressphase, also insbesondere, wenn der Ballenpresse Erntegut über die Aufnahmeeinheit zugeführt wird, eine erste Antriebsgeschwindigkeit des Zugfahrzeugs einstellbar und/oder verstellbar sein. Ausserdem kann mit der Zugfahrzeugsteuereinheit in der Haltephase, also insbesondere, wenn die Zugfahrzeugsteuereinheit das Anpassungssignal und/oder die Zugfahrzeugsteuereinheit und/oder die Ein- und Ausgabeeinheit das Haltesignal von der Ballenpressensteuereinheit empfangen, die Antriebsgeschwindigkeit des Zugfahrzeugs auf 0 km/h einstellen und/oder verstellen. Die erste Antriebsgeschwindigkeit kann bevorzugt > 8 km/h sein, besonders bevorzugt > 4 km/h sein. Die Antriebsgeschwindigkeit in der Haltephase kann auf 0 km/h gesenkt werden. Das Anhalten der Kombination und das Anpassen der Antriebsdrehzahl der Antriebswelle kann gleichzeitig oder nacheinander erfolgen, aber insbesondere in der Haltephase. Auf diese Weise wird die Arbeit des Bedieners der Kombination erleichtert, da er keinen Monitor oder eine Anzeige beobachten muss, die ihm anzeigt, das Zugfahrzeug anzuhalten. Ein weiterer Vorteil ist die Zeiteinsparung durch das gleichzeitige Anhalten der Kombination und das Anpassen der Antriebsdrehzahl der Antriebswelle. Vorteilhafterweise kann so in der Zeit, in der die Kombination angehalten bzw. gestoppt wird das Anpassen der Antriebsdrehzahl der Antriebswelle erfolgen, sodass die Antriebsdrehzahl vor dem Beginn oder Start des Binde- oder Wickelvorgangs oder der Wickelphase also unabhängig vom Binde- oder Wickelvorgang, angepasst wird. Gleichzeitig wird durch das Anhalten des Zugfahrzeugs vorteilhafterweise vermieden, dass weiter Erntegut in die Ballenpresse aufgenommen wird. Von Vorteil ist weiter, dass die Anpassung der Antriebsdrehzahl der Antriebswelle vor dem Beginn oder Start des Binde- oder Wickelvorgangs oder der Wickelphase angepasst wird, da dadurch die für den Binde- und Wickelvorgang anfallende Zeit erheblich verkürzt wird und zeitgleich mit dem Haltevorgang stattfindet. Im Weiteren kann die Ballenpressensteuereinheit der Zugfahrzeugsteuereinheit und/oder der Ein- und Ausgabeeinheit, insbesondere über die Zugfahrzeugsteuereinheit, ein Verzögerungssignal senden, wenn das Ballensignal des Ballensensors anzeigt, dass ein Ballen eine Grösse erreicht hat, die grösser oder gleich einer zweiten vorbestimmten Grösse ist, also grösser oder gleich einer zweiten vorbestimmten Ballengrösse ist. Die Zugfahrzeugsteuereinheit kann das Verzögerungssignal anzeigen und/oder das Verzögerungssignal kann mit der Ein- und Ausgabeeinheit angezeigt werden. Die Kombination, insbesondere das Zugfahrzeug, kann verlangsamt werden, wenn die Zugfahrzeugsteuereinheit und/oder die Ein- und Ausgabeeinheit das Verzögerungssignal von der Ballenpressensteuereinheit empfangen. Ebenso kann die Kombination verlangsamt werden, wenn die Zugfahrzeugsteuereinheit das Verzögerungssignal anzeigt und/oder das Verzögerungssignal mit der Ein- und Ausgabeeinheit angezeigt wird. Im Speziellen kann die Kombination, insbesondere das Zugfahrzeug, mit der Zugfahrzeugsteuereinheit oder von der Bedienperson verlangsamt werden. Mit anderen Worten, die Ballenpressensteuereinheit ist derart betreibbar, dass die Ballenpressensteuereinheit der Zugfahrzeugsteuereinheit ein Verzögerungssignal sendet, wenn die Ballenpressensteuereinheit mit dem vom Ballensensor empfangenen Ballensignal bestimmt, insbesondere berechnet, dass ein Ballen eine Grösse erreicht hat, die grösser oder gleich einer zweiten vorbestimmten Grösse ist. Im Speziellen kann die Ballenpressensteuereinheit vom Ballensensor das Ballensignal empfangen. Die Ballenpressensteuereinheit kann mit dem Ballensignal berechnen und/oder prüfen, ob ein Ballen eine Grösse erreicht hat, die grösser oder gleich einer zweiten vorbestimmten Grösse ist. Wenn die Ballensteuereinheit feststellt, dass der Ballen eine Grösse erreicht hat, die grösser oder gleich einer zweiten vorbestimmten Grösse ist, sendet die Ballenpressensteuereinheit der Zugfahrzeugsteuereinheit ein Verzögerungssignal. Somit kann, insbesondere mit der Zugfahrzeugsteuereinheit, in einer Verzögerungsphase, also insbesondere, wenn die Zugfahrzeugsteuereinheit das Verzögerungssignal von der Ballenpressensteuereinheit empfängt bzw. empfangen hat, eine zweite Antriebsgeschwindigkeit des Zugfahrzeugs eingestellt werden. Dabei kann gelten, dass die erste Antriebsgeschwindigkeit in der Ballenpressphase grösser als die zweite Antriebsgeschwindigkeit in der Verzögerungsphase ist. Die zweite Antriebsgeschwindigkeit kann bevorzugt ≥ 8 km/h > 0 km/h sein, besonders bevorzugt ≥4 km/h > 0 km/h sein. Unter Verlangsamen kann somit verstanden werden, dass die Antriebsgeschwindigkeit von der ersten Antriebsgeschwindigkeit während einer Ballenpressphase auf die zweite Antriebsgeschwindigkeit gesenkt wird. Im Speziellen kann die Zugfahrzeugsteuereinheit betreibbar sein, den Antriebsmotor und/oder den Antriebsstrang und/oder die Bodeneingriffsmittel anzuweisen, das Zugfahrzeug zu verlangsamen. Vorzugsweise wird das Zugfahrzeug abgebremst oder auf eine geringere Antriebsgeschwindigkeit als während der Ballenpressphase gebracht, sobald der Ballen die zweite vorbestimmte Größe erreicht hat oder überschreitet, die etwas kleiner als die erste vorbestimmte Größe ist. Die zweite vorbestimmte Grösse kann kleiner sein (z. B. 10 cm im Durchmesser kleiner), als die erste vorbestimmte Grösse. Im Speziellen kann, insbesondere die Zugfahrzeugsteuereinheit, das Zugfahrzeug verlangsamt werden und/oder eine Antriebsdrehzahl der Antriebswelle der Ballenpresse angepasst werden, wenn die Zugfahrzeugsteuereinheit und/oder die Ein- und Ausgabeeinheit das Verzögerungssignal von der Ballenpressensteuereinheit empfangen oder die Zugfahrzeugsteuereinheit das Verzögerungssignal anzeigt und/oder das Verzögerungssignal mit der Ein- und Ausgabeeinheit angezeigt wird. Durch die Verzögerung wird ein abruptes Stoppen oder Bremsen vermieden, wenn der Ballen die erste Größe erreicht.

In Ausgestaltung der Erfindung ist die Zugfahrzeugsteuereinheit betreibbar, eine Erhöhung oder Verringerung der Antriebsdrehzahl der Antriebswelle zu veranlassen, wenn die Zugfahrzeugsteuereinheit das Anpassungssignal von der Ein- und Ausgabeeinheit und/oder das Haltesignal von der Ballenpressensteuereinheit empfängt. Mit anderen Worten, im Speziellen kann, in der Haltephase, also vor der dem Start des eigentlichen Binde- oder Wickelvorgangs oder der Wickelphase, die Antriebsdrehzahl erhöht oder gesenkt werden, sodass die angepasste Antriebsdrehzahl vor der Wickelphase, insbesondere vor dem Beginn des Binde- oder Wickelvorgang, bereits zur Verfügung steht. Die Antriebsdrehzahl der Antriebswelle kann unabhängig von einer Drehzahl, insbesondere Motordrehzahl, des Antriebsmotor einstellbar und/oder verstellbar sein, insbesondere steuerbar und/oder regelbar sein. Zur Erhöhung bzw. Senkung der Antriebswellendrehzahl gibt es verschiedene Möglichkeiten. Gewöhnlich kann die Drehzahl der Antriebswelle über ein Übersetzungsgetriebe des Zugfahrzeugs in Stufen (540 U/min und 1000 U/min) geschaltet werden. Ebenso kann das Zugfahrzeug einen stufenlos geregelten Zapfwellenantrieb umfassen, welcher unabhängig von der Drehzahl des Antriebsmotors geregelt werden kann. Wesentlicher Vorteil dieser Ausführung ist die Zeiteinsparung. Durch das Anhalten der Kombination und die Erhöhung der Antriebsdrehzahl, insbesondere während des Haltevorgangs der Kombination, kann der Gesamten Vorgang des Anhaltens und das Erhöhen der Antriebsdrehzahl vor dem eigentlichen Binde- bzw. Wickelvorgang durchgeführt werden. Dadurch wird der gesamte Zeitablauf der Ballenpresse verkürzt, was wiederum die Tagesleistungen der Ballenpresse erhöht und Kosten einspart. Als zusätzlicher Nebeneffekt kann durch die Erhöhung der Antriebsdrehzahl vor dem eigentlichen Binde- bzw. Wickelvorgang, der Ballen im Anschluss schneller umwickelt und somit auch schneller aus der Ballenpresskammer ausgeworfen werden.

In Ausgestaltung der Erfindung ist das Zugfahrzeug mit der Zugfahrzeugsteuereinheit lenkbar. Mit anderen Worten, die Zugfahrzeugsteuereinheit ist derart betreibbar, dass das Zugfahrzeug mit der Zugfahrzeugsteuereinheit lenkbar ist. Das Zugfahrzeug kann eine Lenkeinrichtung zum Lenken des Zugfahrzeugs umfassen. Die Zugfahrzeugsteuereinheit kann betreibbar sein, um die Lenkeinrichtung einzustellen und/oder zu verstellen, insbesondere zu steuern und/oder zu regeln. Im Speziellen kann die Zugfahrzeugsteuereinheit das Zugfahrzeug derart lenken, dass die Schwade abwechselnd nahe dem linken und rechten Ende des Aufnahmeeinheit eintritt. Die Zugfahrzeugsteuereinheit kann insbesondere die Breite des Schwads und die Breite der Ballenpresskammer berücksichtigen. Das Zugfahrzeug kann auch so gelenkt werden, dass die tatsächliche Position der Kombination oder des Zugfahrzeugs, die von einer GPS-Antenne bereitgestellt werden, und die Position des Schwads aus dem Speicher übereinstimmen. Lenkdaten könnten auch durch die Zugfahrzeugsteuereinheit oder durch eine separate Lenksteuereinheit berechnet werden. Dazu kann beispielsweise die Zugfahrzeugsteuereinheit als Lenksteuereinheit ausgebildet sein. Im Speziellen kann die Kombination, insbesondere das Zugfahrzeug, über eine elektromagnetische Ventilanordnung auch mit einem Lenkzylinder verbunden sein, der den Lenkwinkel der Vorderachse und/oder der Vorderräder einstellt und/oder verstellt, insbesondere steuert und regelt.

In Ausgestaltung der Erfindung umfasst die Kombination einen Schwadsensor und die Zugfahrzeugsteuereinheit ist betreibbar, das Zugfahrzeug, insbesondere selbsttätig, basierend auf den Signalen des Schwadsensors entlang der Schwade zu lenken, sodass insbesondere eine gleichförmige Ballenform erzielt wird. Der Schwadsensor kann mit der Zugfahrzeugsteuereinheit und/oder der Ballenpressensteuereinheit verbunden sein. Das Zugfahrzeug und/oder die Ballenpresse kann den Schwadsensor umfassen. Der Schwadsensor kann am Zugfahrzeug und/oder an der Ballenpresse angeordnet, insbesondere mit diesen verbunden und/oder befestigt sein. Dadurch kann die Zugfahrzeugsteuereinheit die Kombination, insbesondere das Zugfahrzeug, auf Basis des Signals des Schwadsensors entlang einer Schwade lenken. Der Schwadsensor kann zum Beispiel durch Verwendung von Ultraschall den lateralen Abstand zu den vertikalen Rändern oder Kanten des Schwads messen. Ebenso kann der Schwadsensor eine Kamera umfassen. Die Kamera kann auf die Schwade gerichtet sein. Ausserdem kann die Kamera mit der Zugfahrzeugsteuereinheit und/oder der Ballenpressensteuereinheit verbunden sein. Dadurch kann die Kamera der Zugfahrzeugsteuereinheit ein Videosignal zuführen, das in einem innerhalb oder außerhalb der Zugfahrzeugsteuereinheit vorgesehenen Bildverarbeitungssystem verarbeitet wird. Ebenso kann mit dem Bildverarbeitungssystem eine elektronische Anzeige über die Position des Zugfahrzeugs in Bezug auf die Schwade bereitgestellt werden. Im Speziellen kann die Zugfahrzeugsteuereinheit betreibbar sein, das Zugfahrzeug, insbesondere selbsttätig, basierend auf den Signalen des Schwadsensors und dem Ballensignal des Ballensensors entlang der Schwade zu lenken, sodass eine gleichförmige Ballenform erzielt wird. Dadurch kann die Zugfahrzeugsteuerung die Kombination, insbesondere das Zugfahrzeug, auf Basis des Signals des Schwadsensors und des Ballensignals entlang der Schwade lenken und gleichzeitig eine gleichmäßige Ballenform und -dichte erhalten werden. Ausserdem kann das als Schwade vorliegende Erntegut besser vollständig vom Boden aufgenommen werden.

In Ausgestaltung der Erfindung umfasst die Ballenpresse eine Wickelvorrichtung zum Einwickeln des fertigen Ballens mit Wickelmaterial in der Ballenpresskammer. Die Wickelvorrichtung kann zumindest dahingehend betreibbar sein, das Wickelmaterial zum Einwickeln des fertigen Ballens in die Ballenpresskammer abzugeben. Die Ballenpresse kann einen Wickelsensor umfassen. Die Wickelvorrichtung und/oder ein Wickelsensor können mit der Ballenpressensteuereinheit verbunden sein. Die Ballenpressensteuereinheit kann dahingehend betreibbar sein, die Wickelvorrichtung anzuweisen, das Wickelmaterial abzugeben, wenn die Zugfahrzeugsteuereinheit die Ballenpressensteuereinheit anweist, dass die Antriebsdrehzahl der Antriebswelle angepasst ist, insbesondere die Erhöhung oder Verringerung der Antriebsdrehzahl der Antriebswelle veranlasst oder angepasst ist. Ebenso kann die Ballenpressensteuereinheit dahingehend betreibbar sein, die Wickelvorrichtung anzuweisen, das Wickelmaterial abzugeben, wenn die Ballenpressensteuereinheit vom Ballensensor ein Ballensignal empfängt, dass ein Ballen eine Grösse erreicht hat, die grösser oder gleich der ersten vorbestimmten Grösse ist. Ebenso kann die Ballenpressensteuereinheit dahingehend betreibbar sein, der Zugfahrzeugsteuereinheit nur dann das Haltesignal zuzuführen, wenn der Wickelsensor der Ballenpressensteuereinheit ein Wickelsignal zuführt, das anzeigt, dass das Wickelmaterial von dem Ballen gezogen wird. Das Wickelsignal zeigt also an, dass das Wickelmaterial von dem Ballen gezogen wird, nachdem die Ballenpressensteuereinheit die Wickelvorrichtung angewiesen hat, Wickelmaterial abzugeben. Die Wickelvorrichtung kann auf Anweisung der Ballenpressensteuereinheit ein Garn, ein Netz oder eine Folie an den Ballen auswerfen oder abgeben. Ausserdem kann die Ballenpressensteuereinheit betreibbar sein, ein Fehlersignal zu erzeugen, wenn der Wickelsensor der Ballenpressensteuereinheit kein Wickelsignal zuführt. Durch die Erhöhung der Antriebsdrehzahl der Antriebswelle vor dem Binde- bzw. Wickelvorgang, wird der gesamte Binde- bzw. Wickelvorgangs verkürzt und der Ballen schneller aus der Ballenpresskammer ausgeworfen. Dadurch wird der gesamte Zeitablauf der Ballenpresse verkürzt, was wiederum die Tagesleistungen der Ballenpresse erhöht und Kosten einspart.

In Ausgestaltung der Erfindung ist die Zugfahrzeugsteuereinheit derart betreibbar, dass die Kombination, insbesondere das Zugfahrzeug, mit einer Geschwindigkeit, insbesondere eine Durchsatzgeschwindigkeit, antreibbar ist, die einen vorbestimmten Durchsatz der Aufnahmeeinheit der Ballenpresse ergibt. Die Zugfahrzeugsteuereinheit kann die Kombination, insbesondere das Zugfahrzeug derart einstellen und/oder verstellen, insbesondere derart steuern und regeln, dass das Zugfahrzeug, insbesondere automatisch, mit einer Antriebsgeschwindigkeit antreibbar ist, die einen gewünschten bzw. einen vorbestimmten Durchsatz der Aufnahmeeinheit der Ballenpresse ergibt. Im Speziellen kann die Zugfahrzeugsteuereinheit betreibbar sein, den Antriebsmotor und/oder den Antriebsstrang und/oder die Bodeneingriffsmittel anzuweisen, das Zugfahrzeug mit der Antriebsgeschwindigkeit, insbesondere der Durchsatzgeschwindigkeit, anzutreiben. Der Durchsatz kann gemessen werden, indem das Drehmoment an einer Zapfwelle (PTO) des die Ballenpresse antreibenden Zugfahrzeugs erfasst wird, oder mit einem Aufnahmesensor, der die Dicke einer von der Ballenpresse aufgenommenen Erntegutschicht erfasst, oder mit einem Drehmomentsensor, der das Drehmoment zum Antreiben der Aufnahmeeinheit misst.

In einem bevorzugten Ausführungsbeispiel umfasst die Kombination, insbesondere das Zugfahrzeug, eine GPS-Vorrichtung, wobei mit der GPS-Vorrichtung Positionsdaten versendbar und/oder empfangbar sind, und/oder insbesondere berechenbar sind. Die GPS-Vorrichtung kann beispielsweise eine GPS-Antenne und einen Speicher umfassen. Die Positionsdaten können insbesondere die Position der Kombination oder des Zugfahrzeugs umfassen. Im Speicher kann die Position des Schwads, die aus vorherigen Bearbeitungsvorgängen des Schwads bekannt ist, gespeichert sein. Die GPS-Vorrichtung und der Speicher können insbesondere mit der Zugfahrzeugsteuereinheit verbunden sein, insbesondere signalverbunden sein.

Die Erfindung betrifft weiter eine Kombination aus einem Zugfahrzeug und einer Ballenpresse, insbesondere eine Kombination zur Durchführung eines Verfahrens nach einem der Ansprüche 1 bis 14. Die Kombination umfasst eine Ein- und Ausgabeeinheit und eine Zugfahrzeugsteuereinheit und eine Ballenpressensteuereinheit. Die Zugfahrzeugsteuereinheit ist mit der Ein- und Ausgabeeinheit und der Ballenpressensteuereinheit verbunden, insbesondere signalverbunden. Die Ballenpresse ist mit dem Zugfahrzeug verbunden. Das Zugfahrzeug umfasst einen Antriebsmotor, welcher mit einer Antriebswelle der Ballenpresse verbunden ist. Die Ballenpresse umfasst eine Aufnahmeeinheit zur Aufnahme von Erntegut und eine Ballenpresskammer, um das aufgenommene Erntegut zu einem Ballen zu pressen. Mittels oder mit der Ein- und Ausgabeeinheit, insbesondere von einer oder durch eine Bedienperson der Kombination, ist ein Anpassungssignal generierbar, insbesondere erzeugbar, und an die Zugfahrzeugsteuereinheit sendbar. Die Zugfahrzeugsteuereinheit ist derart betreibbar, dass mit der Zugfahrzeugsteuereinheit eine Antriebsdrehzahl der Antriebswelle der Ballenpresse anpassbar ist, wenn die Zugfahrzeugsteuereinheit das Anpassungssignal empfängt. Das erfindungsgemässe Verfahren kann mit der erfindungsgemässen Kombination ausführbar sein. Die erfindungsgemässe Kombination umfasst insbesondere die oben beschriebenen Ausführungen des Verfahrens. Die erfindungsgemässe Kombination weist die oben beschriebenen Vorteile des Verfahrens auf.

Die Ballenpressensteuereinheit und die Zugfahrzeugsteuereinheit und die Ein- und Ausgabeeinheit können jeweils ein elektronisches Modul und/oder ein eingebettetes System sein und/oder ein Speichermodul und/oder einen Prozessor umfassen. Die Ballenpressensteuereinheit und die Zugfahrzeugsteuereinheit und die Ein- und Ausgabeeinheit können aber auch als ein gemeinsames elektronisches Modul und/oder ein gemeinsames eingebettetes System ausgebildet sein und/oder ein Speichermodul und/oder einen Prozessor umfassen. Die Ballenpressensteuereinheit kann mit dem Ballensensor und der Zugfahrzeugsteuereinheit und/oder dem Schwadsensor und/oder der Wickelvorrichtung und/oder dem Wickelsensor einem ersten und/oder zweiten Aktuator und/oder dem Aufnahmesensor und/oder dem Drehmomentsensor verbunden sein, bevorzugt signalverbunden und/oder signalübertragend und/oder datenleitend verbunden sein. Der Ballensensor und die Zugfahrzeugsteuereinheit und/oder der Schwadsensor und/oder die Wickelvorrichtung und/oder der Wickelsensor und/oder der erste und/oder zweite Aktuator und/oder der Aufnahmesensor und/oder der Drehmomentsensor können mit der Ballenpressensteuereinheit einstellbar und/oder verstellbar sein, und/oder bevorzugt steuerbar und/oder regelbar sein. Die Zugfahrzeugsteuereinheit kann mit der Ballenpressensteuereinheit und/oder dem Schwadsensor und/oder dem Antriebsmotor und/oder der Antriebswelle und/oder dem Antriebsstrang und/oder der GPS-Vorrichtung und/oder dem Lenkmittel und/oder dem ersten und/oder zweiten Aktuator und/oder dem Aufnahmesensor und/oder dem Drehmomentsensor verbunden sein, bevorzugt signalverbunden und/oder signalübertragend und/oder datenleitend verbunden sein. Die Ballenpressensteuereinheit und/oder der Schwadsensor und/oder der Antriebsmotor und/oder die Antriebswelle und/oder der Antriebsstrang und/oder die GPS-Vorrichtung und/oder das Lenkmittel und/oder der erste und/oder zweite Aktuator und/oder der Aufnahmesensor und/oder der Drehmomentsensor können mit der Zugfahrzeugsteuereinheit einstellbar und/oder verstellbar sein, und/oder bevorzugt steuerbar und/oder regelbar sein. Der erste und/oder zweite Aktuator können mit der Zugfahrzeugsteuereinheit und/oder der Ballenpressensteuereinheit betätigbar sein. Die Ein- und Ausgabeeinheit kann ein virtuelles Terminal eines Bussystems, insbesondere mit einer Tastatur und einer Anzeigevorrichtung sein, oder auch ein Tablet oder ein Smartphone sein, in welche insbesondere eine Anzeige und eine Eingabeeinrichtung implementiert sind. Es könne also beliebige Ein- und Ausgabegeräte verwendet werden. Unter einer signalverbundenen und/oder signalübertragenden und/oder datenleitenden Verbindung ist dabei zu verstehen, dass ein Austausch von Signalen zwischen den verbundenen Bauteilen stattfindet. Die Signale werden in der Zugfahrzeugsteuereinheit und/oder der Ballenpressensteuereinheit verarbeitet und dienen somit zur Einstellung und/oder Verstellung, insbesondere der Steuerung und/oder Regelung und Ansteuerung, der signalverbundenen und/oder signalübertragend und/oder datenleitend miteinander verbundenen Bauteile. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein kann. Im Speziellen kann die Verbindung über eine BUS-Leitung vorzugsweise als ISO-BUS-Leitung nach der Norm ISO 11783 ausgebildet. Die Zugfahrzeugsteuereinheit und/oder die Ein- und Ausgabeeinheit können dem Zugfahrzeug und die Ballenpressensteuereinheit kann der Ballenpresse zugeordnet sein. Wenn die Zugfahrzeugsteuereinheit und die Ballenpressensteuereinheit und/oder die Ein- und Ausgabeeinheit als ein Bauteil ausgebildet sind, können diese entweder dem Zugfahrzeug oder der Ballenpresse zugeordnet sein. Die Zugfahrzeugsteuereinheit und/oder die Ballenpressensteuereinheit können mit der in einer Kabine des Zugfahrzeugs angeordneten Ein- und Ausgabeeinheit verbunden sein, bevorzugt signalverbunden und/oder signalübertragend und/oder datenleitend verbunden sein. Mit der Ein- und Ausgabeeinheit können von einer Bedienperson eingegebene Daten und/oder Befehle an die Zugfahrzeugsteuereinheit und/oder die Ballenpressensteuereinheit übertragen oder von dieser empfangen und ausgegeben werden können. Denkbar ist aber auch, dass die Zugfahrzeugsteuereinheit und/oder die Ballenpressensteuereinheit mittelbar durch eine übergeordnete Steuerungseinheit mit der Ein- und Ausgabeeinheit verbunden sind.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels einer erfindungsgemässen Kombination aus einem Zugfahrzeug und einer Ballenpresse, und
- Fig. 2: ein schematisches Flussdiagramm, das eine erstes Ausführungsbeispiel des erfindungsgemässen Verfahrens zeigt, und
- Fig. 3: ein weiteres schematisches Flussdiagramm, das ein zweites Ausführungsbeispiel des erfindungsgemässen Verfahrens zeigt.

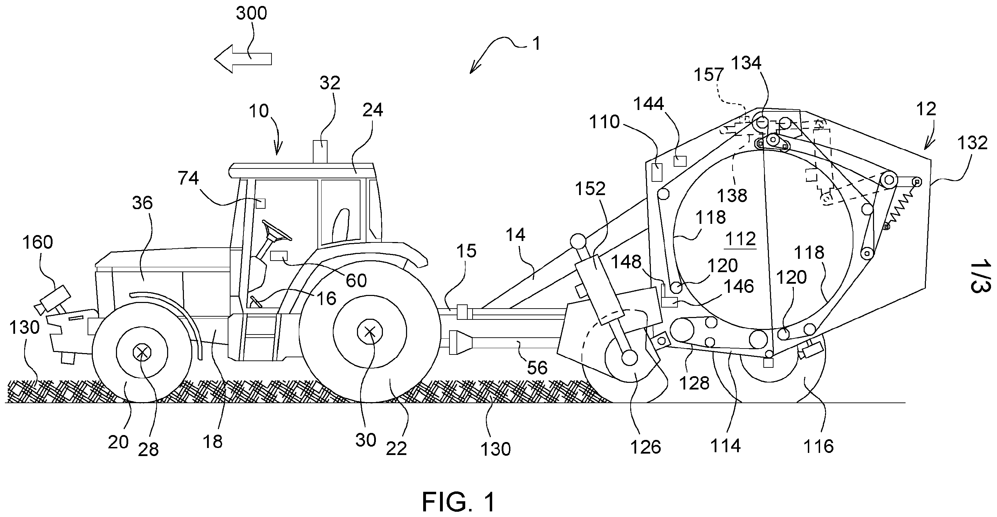

Figur 1 zeigt eine schematische Darstellung eines ersten Ausführungsbeispiels einer erfindungsgemässen Kombination 1 aus einem Zugfahrzeug 10 und einer Ballenpresse 12. Die Kombination umfasst eine Ein- und Ausgabeeinheit 74 und eine Zugfahrzeugsteuereinheit 60 und eine Ballenpressensteuereinheit 110. Das Zugfahrzeug 10 umfasst weiter einen Antriebsmotor 36, welcher mit einer Antriebswelle 56 der Ballenpresse 12 verbunden ist, und im Speziellen die Zugfahrzeugsteuereinheit 60. Der Antriebsmotor 36 kann als Verbrennungskraftmaschine oder als Elektromotor ausgeführt sein. Das Zugfahrzeug 10 umfasst im Speziellen ausserdem die Ein- und Ausgabeeinheit 74. Die Zugfahrzeugsteuereinheit 60 ist mit der Ein- und Ausgabeeinheit 74 verbunden, insbesondere signalverbunden.

Das Zugfahrzeug 10 kann einen Zugfahrzeugrahmen 18 umfassen, insbesondere auf dem Zugfahrzeugrahmen 18 getragen sein. Der Zugfahrzeugrahmen 18 kann auf Bodeneingriffsmittel getragen sein. Die Bodeneingriffsmittel, hier in Form von Vorderrädern 20 und Hinterrädern 22 dargestellt, stehen mit einem Untergrund zur Übertragung von Antriebskräften in Eingriff und/oder durch die sich das Zugfahrzeug 10 auf dem Untergrund abstützt. Die Bodeneingriffsmittel, insbesondere die Vorderräder 20 und Hinterräder 22 können lenkbar und/oder beweglich sein. Das Zugfahrzeug 10 kann auch eine Kabine 24 umfassen. Die Kabine 24 kann vom Zugfahrzeugrahmen 18 getragen sein. Ausserdem kann sich in der Kabine 24 eine Arbeitsstation des Bedieners befinden. Das Zugfahrzeug 10 umfasst eine Vorderachse 28 und eine Hinterachse 30. Die Hinterachse 30 kann permanent und die Vorderachse 28 kann bedarfsweise zuschaltbar oder permanent angetrieben werden. Die Vorderachse 28, und/oder insbesondere die Hinterachse 30 können lenkbar sein. Das Zugfahrzeugs 10 kann beispielsweise auch ein Gaspedal 16 oder einen nicht gezeigten Handgashebel umfassen. Im Folgenden beziehen sich Richtungsangaben wie vorne und hinten, links und rechts auf die Vorwärtsrichtung 300 des Zugfahrzeugs 10, die in Fig. 1 nach links geht.

Die Ballenpresse 12 ist mit dem Zugfahrzeug 10 verbunden, und/oder insbesondere gekoppelt. Beispielsweise kann die Ballenpresse 12 mit einer Deichsel 14 der Ballenpresse 12 an eine Anhängerkupplung 15 (engl. Hitch) des Zugfahrzeugs 10 gekoppelt sein. Das Zugfahrzeug 10 kann die Ballenpresse 12 ziehen. Die Ballenpresse 12 umfasst eine Aufnahmeeinheit 126 zur Aufnahme von Erntegut, eine Ballenpresskammer 112, um das aufgenommene Erntegut zu einem Ballen zu pressen und im Speziellen die Ballenpressensteuereinheit 110, die mit der Zugfahrzeugsteuereinheit 60 verbunden ist, bevorzugt signalverbunden ist. Die Ballenpresse 12 kann einen Ballenpressenrahmen 114 umfassen. Der Ballenpressenrahmen 114 kann auf Rädern 116 getragen sein. Die Ballenpresskammer 112 kann am oder auf dem Ballenpressenrahmen 114 angeordnet, bevorzugt mit diesem verbunden und/oder an diesem befestigt und/oder getragen sein.

Die Ballenpresse 12 ist mit einer größenveränderlichen Ballenpresskammer 112 bzw. als Ballenpresse 12 mit variabler Ballenpresskammer 112 ausgebildet. Das Pressmittel 118 ist als Band oder Riemen ausgebildet. Das Pressmittel umgibt die Ballenpresskammer 112 und ist mit Rollen 120 geführt. Die Ballenpresse kann aber auch eine größenunveränderliche Ballenpresskammer umfassen. Hierbei kann das Pressmittel als eine oder mehrere Pressrollen ausgebildet sein, insbesondere eine Vielzahl zueinander parallel verlaufender Pressrollen zum Pressen des Ernteguts.

Die Aufnahmeeinheit 126, insbesondere in Form einer Pick-up, ist an der Ballenpresse 12 angeordnet, insbesondere unterhalb der Vorderkante der Ballenpresse 12. Die Aufnahmeeinheit 126 kann sich um eine Querachse bewegenden oder drehenden Zinken umfassen. Der Aufnahmeeinheit 126 kann in einer Erntegutflussrichtung ein Förderband 128 der Ballenpresse 12 folgen. Das Förderband 128 könnte auch durch einen Rotor (nicht gezeigt) ersetzt werden, oder ein Rotor könnte in Gutflussrichtung zwischen der Aufnahmeeinheit 126 und dem Förderband 128 eingefügt werden. Anstelle der Aufnahmeeinheit 126, insbesondere der Pick-up, könnten auch andere geeignete Erntegutaufnahmemittel wie Mäh- und Fördereinheiten verwendet werden.

Die Aufnahmeeinheit 126 sammelt Erntegut, das in einer Schwade 130 aus Gras, Heu oder Stroh auf dem Feld liegt, und führt es der Ballenpresskammer 112 zu. Die Pressmittel 118, insbesondere eines oder mehrere Bänder oder Gurte, können während eines Ballenpressvorgangs in ihrer Längsrichtung in Bewegung versetzt werden, indem eine oder mehrere der Rollen 120 rotierend angetrieben werden. Das in die Ballenpresskammer 112 eingeführte Erntegut dreht sich somit auch während des Pressens. Während des Pressenvorgangs nimmt die Größe der Ballenpresskammer 112 mit der Zeit zu.

Die Ballenpresse 12 kann eine Auswurfklappe 132 umfassen. Die Auswurfklappe 132 kann schwenkbar an der Ballenpresse 12, insbesondere dem Ballenpressenrahmen 114 oder einem Gehäuseteil, angeordnet, bevorzugt mit diesem verbunden und/oder an diesem befestigt und/oder getragen sein. Die Auswurfklappe 132 kann um eine Achse 134 schwenkbar sein, die sich quer zur Vorwärtsrichtung des Zugfahrzeugs 10 und der Ballenpresse 12 erstreckt.

Ein erster Aktuator 138 in Form eines Hydraulikzylinders kann mit einem Ende mit dem Ballenpressenrahmen 114 und mit einem zweiten Ende mit der Auswurfklappe 132 verbunden, insbesondere an dieser befestigt und/oder montiert sein. Der erste Aktuator 138 kann mit der Auswurfklappe 132 derart verbunden sein, dass er die Auswurfklappe 132 um die Achse 134 nach oben (in Fig. 1 gegen den Uhrzeigersinn) schwenken kann, um einen Ballen aus der Ballenpresskammer 112 auswerfen zu können. Die Auswurfklappen 132 kann also mit dem ersten Aktuator 138 geöffnet oder geschlossen bzw. angehoben und abgesenkt werden. Der erste Aktuator 138 kann mit der Ballenpressensteuereinheit 110, beispielsweise über eine elektromagnetische Ventilanordnung, eingestellt und/oder verstellt, insbesondere gesteuert und geregelt werden. Die elektromagnetische Ventilanordnung kann dabei mit der Ballenpressensteuereinheit 110 eingestellt und/oder verstellt, insbesondere gesteuert und geregelt werden. Ein Auswurfklappensensor 157 kann beispielsweise die Position des ersten Aktuators 138 oder der Auswurfklappe 132 erfassen.

Die Ballenpresse 12 kann einen Ballensensor 144 umfassen, um die Grösse eines Ballens in der Ballenpresskammer 112 zu erfassen bzw. mit dem eine Grösse eines Ballens erfasst wird. Die Ballenpressensteuereinheit 110 kann mit dem Ballensensor 144 verbunden, bevorzugt signalverbunden und/oder signalübertragend und/oder datenleitend verbunden sein. Die Ballenpressensteuereinheit 110 kann mit der Zugfahrzeugsteuereinheit 60 und/oder dem Ballensensor 144 beispielsweise mittels eines Kabels, insbesondere mit einem lösbaren Stecker, oder über eine Funkverbindung verbunden sein. Der Stecker kann mit einer Steckdose an der Rückseite des Zugfahrzeugs 10, insbesondere des Zugfahrzeugrahmens 18 verbunden sein. Der mit der Ballenpressensteuereinheit 110 verbundene Ballensensor 144 kann an oder in der Ballenpresskammer 112 angeordnet sein, insbesondere in dieser befestigt. Der Ballensensor 144 kann beispielsweise den Abstand zur Ballenoberfläche bzw. zu dem an der Ballenoberfläche anliegendem Pressmittel 118 erfassen und so Auskunft über die Grösse des Ballens geben, insbesondere den Ballendurchmesser. Die von den Ballensensor 144 erfasste Grösse des Ballens oder die Ballenform kann dem Bediener auf der Ein- und Ausgabeeinheit 74 angezeigt werden.

Eine Wickelvorrichtung 146 kann an, insbesondere in der Nähe, der Ballenpresskammer 112 angeordnet. Die Wickelvorrichtung 146 kann mit der Ballenpressensteuereinheit 110 verbunden sein und, sobald diese von der Ballenpressensteuereinheit 110 dazu angewiesen wird, ein Wickelmaterial wie Garn, Band, Netz oder Verpackungsbogen an die Ballenpresskammer 112 abgeben. Der rotierende Ballen kann an dem Wickelmaterial ziehen oder dieses einfangen, so dass es dann um den Ballen gewickelt wird. Ein Wickelsensor 148 kann mit der Wickelvorrichtung 146 interagieren und erfassen, ob der Ballen an der Verpackung zieht.

Die Aufnahmeeinheit 126 kann beispielsweise mit einem zweiten Aktuator 152, hier in Form eines Hydraulikzylinders, angehoben und abgesenkt werden. Der zweite Aktuator 152 kann mit der Ballenpressensteuereinheit 110, beispielsweise über eine weitere elektromagnetische Ventilanordnung, eingestellt und/oder verstellt, insbesondere gesteuert und geregelt werden. Die weitere elektromagnetische Ventilanordnung kann dabei mit der Ballenpressensteuereinheit 110 eingestellt und/oder verstellt, insbesondere gesteuert und geregelt werden.

An das Zugfahrzeug 10, insbesondere an die Vorderseite des Zugfahrzeugs 10, kann ein Schwadsensor 160, hier als eine Kamera ausgebildet, montiert sein, die auf die Schwade 130 gerichtet ist. Die Kamera liefert ein Videosignal an die Zugfahrzeugsteuereinheit 60, das in einem Bildverarbeitungssystem verarbeitet werden kann. Das Bildverarbeitungssystem kann insbesondere als Teil der Zugfahrzeugsteuereinheit 60 ausgebildet sein, um eine elektronische Angabe über die Position des Zugfahrzeugs 10 in Bezug auf die Schwade 130 bereitzustellen.

Die Kombination 1, insbesondere das Zugfahrzeug, kann auch eine GPS-Vorrichtung 32 umfassen, wobei mit der GPS-Vorrichtung 32 Positionsdaten versendbar und/oder empfangbar sind, und/oder insbesondere berechenbar sind. Die GPS-Vorrichtung 32 kann beispielsweise als eine Positionsdaten empfangende GPS-Antenne und einen Speicher umfassen. Im Speicher kann die Position des Schwads 130 gespeichert sein, die aus früheren Arbeitsgängen bekannt ist. Das Zugfahrzeug 10 könnte dann so gelenkt werden, dass die tatsächliche Position der Kombination 1 oder des Zugfahrzeugs 10, die von der GPS-Antenne bereitgestellt werden, und die Position des Schwads 130 aus dem Speicher übereinstimmen. Lenkdaten könnten auch durch die Ballenpressensteuereinheit 110 oder durch eine separate, nicht gezeigte, Lenksteuereinheit berechnet werden. Das Zugfahrzeug 10 kann mit der Zugfahrzeugsteuereinheit 60 auch lenkbar sein. Dazu kann beispielsweise die Zugfahrzeugsteuereinheit 60 als Lenksteuereinheit ausgebildet sein. Im Speziellen kann die Kombination 1, insbesondere das Zugfahrzeug 10, über eine elektromagnetische Ventilanordnung auch mit einem Lenkzylinder verbunden sein, der den Lenkwinkel der Vorderachse 28 und/oder der Vorderräder 20 einstellt und/oder verstellt, insbesondere steuert und regelt.

Wesentlich für die erfindungsgemässe Kombination 1 und das erfindungsgemässe Verfahren ist, dass mittels oder mit der Ein- und Ausgabeeinheit 74 ein Anpassungssignal generiert und an die Zugfahrzeugsteuereinheit 60 gesendet wird, und die Zugfahrzeugsteuereinheit 60 eine Antriebsdrehzahl der Antriebswelle 56 der Ballenpresse 12 anpasst, wenn die Zugfahrzeugsteuereinheit 60 das Anpassungssignal empfängt.

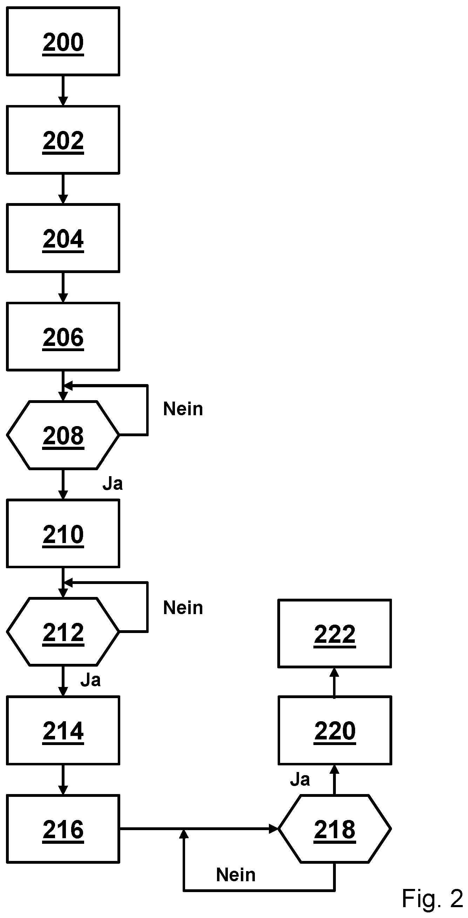

In Figur 2 zeigt ein schematisches Flussdiagramm ein erstes Ausführungsbeispiel des erfindungsgemässen Verfahrens, dass insbesondere mit der in Figur 1 gezeigten erfindungsgemässe Kombination 1 durchgeführt werden kann. Im Folgenden wird lediglich auf in Figur 1 nicht gezeigten Details eingegangen. Nach dem Start in Schritt 200 können die Zugfahrzeugsteuereinheit 60 und die Ballenpressensteuereinheit 110 in einem optionalen Schritt 202 initiiert werden, d. h. in Schritt 202 kann beispielsweise geeignete Software in ihre Speicher geladen. Im optionalen Schritt 204 kann der Antriebsmotor 36 gestartet, beispielsweise indem der Bediener einen Zündschlüssel dreht oder einen bestimmten Schlüssel niederdrückt.

Dann kann in einem optionalen Schritt 206 eine gewünschte Antriebsgeschwindigkeit eingestellt werden. In einer bevorzugten Ausführungsform kann die Antriebsgeschwindigkeit des Zugfahrzeugs 10 beispielsweise zunächst durch das Gaspedal 16 oder den nicht gezeigten Handgashebel vorgegeben werden. Ebenso kann die Antriebsgeschwindigkeit des Zugfahrzeugs 10 mit der Zugfahrzeugsteuereinheit 60 eingestellt und/oder verstellt werden, insbesondere mit der Ein- und Ausgabeeinheit 74 vorgegeben werden.

In einem optionalen Schritt 208 kann die Ballenpressensteuereinheit 110 das Ballensignal des Ballensensors 144 empfangen und auswerten. Dazu kann die Ballenpressensteuereinheit 110 ermitteln, insbesondere berechnen, ob ein Ballen eine Grösse erreicht hat, die grösser oder gleich einer zweiten vorbestimmten Grösse ist. Die zweite vorbestimmte Grösse kann insbesondere kleiner sein (z. B. 10 cm im Durchmesser kleiner), als die erste vorbestimmte Grösse. Die erste vorbestimmte Grösse, die einer gewünschten Ballengrösse entspricht, und/oder die zweite vorbestimmte Grösse können von der Bedienungsperson mittels der Ein- und Ausgabeeinheit 74 eingegeben werden. Wenn die zweite vorbestimmte Grösse nicht erreicht wurde, kann Schritt 208 erneut durchgeführt werden.

Wenn andererseits die Grösse des Ballens gleich oder größer als die zweite vorbestimmte Grösse ist, wird der optionale Schritt 210 ausgeführt. In Schritt 210 kann die Ballenpressensteuereinheit 110 derart betreibbar sein bzw. wird derart betrieben, dass die Ballenpressensteuereinheit 110 der Zugfahrzeugsteuereinheit 60 ein Verzögerungssignal sendet. Die Zugfahrzeugsteuereinheit 60 wiederum ist betreibbar bzw. wird betrieben, das Zugfahrzeug zu verlangsamen, wenn die Zugfahrzeugsteuereinheit 60 das Verzögerungssignal von der Ballenpressensteuereinheit 110 empfängt. Das Zugfahrzeug kann mit einer langsameren Antriebsgeschwindigkeit, beispielsweise 4 km/h, angetrieben werden.

Im folgenden optionalen Schritt 212 kann die Ballenpressensteuereinheit 110 das Ballensignal des Ballensensors 144 empfangen und auswerten. Dazu kann die Ballenpressensteuereinheit 110 ermitteln, insbesondere berechnen, ob ein Ballen eine Grösse erreicht hat, die grösser oder gleich der ersten vorbestimmten Grösse ist. Wenn die erste vorbestimmte Grösse des Ballens nicht erreicht wurde, können Schritt 208 und/oder Schritt 212 erneut durchgeführt werden.

In Schritt 214 wird mittels oder mit der Ein- und Ausgabeeinheit ein Anpassungssignal generiert und an die Zugfahrzeugsteuereinheit gesendet. Ausserdem passt die Zugfahrzeugsteuereinheit 60 eine Antriebsdrehzahl der Antriebswelle 56 der Ballenpresse 12 an, wenn die Zugfahrzeugsteuereinheit 60 das Anpassungssignal empfängt. Dabei kann eine Bedienperson die Ein- und Ausgabeeinheit 74 betätigen, beispielsweise eine Schaltfläche oder eine Taste oder einen Knopf betätigen, so dass das Anpassungssignal generiert und versendet wird. Ausserdem kann in Schritt 214 optional ein Bremsvorgang zum Stoppen der Kombination 1, insbesondere des Zugfahrzeugs 10, eingeleitet werden. Das Einleiten und Durchführen des Bremsvorgangs kann beispielsweise manuell durch die Bedienperson erfolgen. Der Bremsvorgang zum Stoppen des Zugfahrzeugs 10 kann aber auch optional von der Zugfahrzeugsteuereinheit 60 eingeleitet werden, wenn die Zugfahrzeugsteuereinheit 60 das Anpassungssignal von der Ein- und Ausgabeeinheit empfängt. Dabei kann mit der Zugfahrzeugsteuereinheit 60 die Antriebsgeschwindigkeit des Zugfahrzeugs 10 eingestellt und/oder verstellt werden. In einer weiteren optionalen Ausführung wird Schritt 214 ausgeführt, wenn das Ballensignal des Ballensensors 144 anzeigt, dass ein Ballen eine Grösse erreicht hat, die grösser oder gleich einer ersten vorbestimmten Grösse ist. Hierbei leitet die Zugfahrzeugsteuereinheit 60 in Schritt 214 einen Bremsvorgang zum Stoppen des Zugfahrzeugs 10 ein und/oder passt die Antriebsdrehzahl der Antriebswelle 56 der Ballenpresse 12 an, wenn die Zugfahrzeugsteuereinheit 60 das Anpassungssignal von der Ein- und Ausgabeeinheit 74 und die Zugfahrzeugsteuereinheit 60 und/oder die Ein- und Ausgabeeinheit 74 das Haltesignal von der Ballenpressensteuereinheit 110 empfangen. Das in Schritt 214 vorgesehene Einleiten des Bremsvorgangs zum Stoppen des Zugfahrzeugs kann auch optional in den Schritten 2160 oder 218 erfolgen.

Wenn wiederum die Antriebsdrehzahl der Antriebswelle 56 der Ballenpresse angepasst ist, kann optional Schritt 216 ausgeführt, in dem die Ballenpressensteuereinheit 110 die Wickelvorrichtung 146 anweist, ein Wickelmaterial auf den Ballen abzugeben. Unter Anpassen der Antriebsdrehzahl der Antriebswelle 56 kann eine Erhöhung oder Verringerung der Antriebsdrehzahl verstanden werden. Falls notwendig oder nützlich, kann die Aufnahmeeinheit 126 durch den zweiten Aktuator 152 auf Befehl der Ballenpressensteuereinheit 110 angehoben werden, bevor die Wickelvorrichtung 146 betätigt wird.

Es folgt der optionale Schritt 218, in dem die Ballenpressensteuereinheit 110 anhand der vom Wickelsensor 148 gelieferten Signale überprüft, ob der Ballen das Wickelmaterial erfasst hat und somit zieht. Wenn dies nicht zutrifft, wird Schritt 218 erneut durchgeführt, andernfalls kann optional Schritt 220 durchgeführt werden.

Es folgt Schritt 220, in dem der Wickelvorgang durchgeführt und sein Ende abgewartet wird. Ein Fehlersignal kann von der Ballenpressensteuerung 110 an die Ein- und Ausgabeeinheit 74 gesendet, wenn der Wickelsensor kein Signal an die Ballenpressensteuereinheit 110 sendet. Ausserdem kann, wie unter Schritt 214 beschrieben, der Bremsvorgang zum Stoppen der Kombination 1, insbesondere des Zugfahrzeugs 10, eingeleitet werden. Danach wird im Schritt 222 der gewickelte Ballen ausgeworfen.

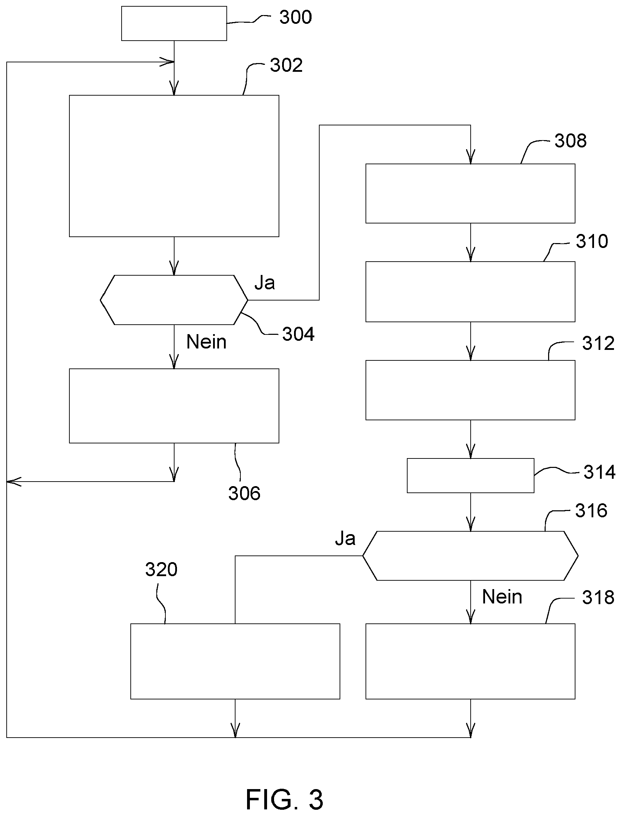

Um die Arbeit für den Bediener noch einfacher zu machen, richtet sich ein zweiter Aspekt der vorliegenden Erfindung auf einen automatischen Lenkbetrieb des Zugfahrzeugs 10 während des Ballenpressvorgangs. Der beschriebene Lenkvorgang versucht zusätzlich, eine exakt zylindrische Form des Ballens zu erhalten. In Figur 3 zeigt ein schematisches Flussdiagramm ein zweites Ausführungsbeispiel des erfindungsgemässen Verfahrens, dass insbesondere mit der in Figur 1 gezeigten erfindungsgemässe Kombination 1 durchgeführt werden kann. Im Folgenden wird lediglich auf in den Figuren 1 und 2 nicht gezeigte Details eingegangen. Die in Figur 3 gezeigte Verfahrensschritte können insbesondere in Kombination mit den in Figur 2 gezeigten Verfahrensschritten erfolgen.

Der Lenkvorgang wird von der Zugfahrzeugsteuereinheit 60 unter Verwendung des Signals des Schwadsensors 160, insbesondere des Videosignals von der Kamera, und insbesondere des Ballensignals des Ballensensors 144 durchgeführt, die der Zugfahrzeugsteuereinheit 60 von der Ballenpressensteuereinheit 110 bereitgestellt werden. Es wäre auch möglich, zumindest die Funktion des Umwandelns des Ballensignals des Ballensensors 144 in ein Ballenformsignal durch die Zugfahrzeugsteuereinheit 60 anstelle durch die Ballenpressensteuereinheit 110 vorzusehen, z.B. durch direktes Verbinden des Ballensensors 144 mit der Zugfahrzeugsteuereinheit 60. Die Kamera könnte auch beispielsweise durch zwei Schwadpositionssensoren ersetzt oder ergänzt werden, die unabhängig voneinander die Position der Ränder des Schwads 130 erfassen, die auf jeder Seite des Zugfahrzeugs 10 installiert sind. Die Schwadpositionssensoren können in einer Ausführungsform unterhalb der Zugfahrzeugseiten angebracht sein und den seitlichen Abstand zu den vertikalen Flanschen des Schwads messen, beispielsweise unter Verwendung von Ultraschall.

Nach dem Starten des Lenkvorgangs in Schritt 300 kann in Schritt 302 unter Verwendung der in einem Bildverarbeitungssystem verarbeiteten Signale der Kamera die Breite W der Schwade und der Versatz D der Mittelachse der Schwade von der Mittelachse des Zugfahrzeugs 10 berechnet werden. Die Berechnung kann mit dem als Teil der Zugfahrzeugsteuerung 60 ausgebildeten Bildverarbeitungssystem erfolgen. Ebenso kann das Bildverarbeitungssystem aber auch als Teil der GPS-Vorrichtung 32 ausgebildet sein und die Berechnung mit der GPS-Vorrichtung erfolgen.

In Schritt 304 wird geprüft, ob die Breite W des Schwads 130 kleiner als die Breite Wb der Ballenpresskammer 112 ist. Wenn dies nicht der Fall ist, d. h. die Ballenpresse die gleiche Breite wie die Schwade oder sogar weniger hat, wird der Traktor in Schritt 306 abhängig von dem Versatz D nach links oder rechts gelenkt, um auf die Schwade 130 zentriert zu bleiben. Schritt 302 folgt auf Schritt 306.

Wenn andererseits gemäß Schritt 304 die Breite W des Schwads 130 kleiner als die Breite Wb der Ballenpresskammer 112 ist, wird Schritt 308 ausgeführt. In Schritt 308 wird ein Wert ΔBreite berechnet, der dem Absolutwert der Differenz zwischen der Breite Wb der Ballenpresskammer 112 und die Breite W des Schwads 130 entspricht.

In Schritt 310 empfängt die Zugfahrzeugsteuereinheit 60 das Ballensignal des Ballensensors 144 von der Ballenpressensteuereinheit 110. Informationen über eine Ballenformabweichung ΔS von einer zylindrischen Form werden in Schritt 312 berechnet, indem beispielsweise die Werte unterschiedlicher Messungen der Grösse des Ballens oder Werte der Grösse des Ballens, die gleichzeitig von mehreren Ballensensoren 144 erfasst wurden, voneinander subtrahiert werden.

Wenn der Absolutwert der Ballenformabweichung ΔS nicht größer als ein vorbestimmter Schwellenwert ist, was in Schritt 314 überprüft wird, wird Schritt 316 durchgeführt. In Schritt 316 kann das Zugfahrzeug 10, insbesondere der Lenkzylinder, so eingestellt und/oder verstellt, insbesondere gesteuert und geregelt werden, dass der Versatz D größer als ΔBreite/2 - x cm und kleiner als ΔBreite/2 + x cm wird, mit 1 cm ≤ x ≤ 15 cm, bevorzugt 3 cm ≤ x ≤ 8 cm, besonders bevorzugt x = 5 cm. Natürlich können die Grenzgrenzen des Versatzes D auch unter Berücksichtigung der Breite der Aufnahmeeinheit feinabgestimmt werden. Da D positiv ist, wird das Zugfahrzeug 10 zur linken Seite der Schwade 130 gelenkt. In einem Beispiel, wenn W = 70 cm, Wb = 120 cm, wäre ΔBreite 50 cm, so dass die Zugfahrzeugsteuereinheit 60 versuchen würde, D zwischen 20 und 30 cm zu bekommen, also den Traktor nach links lenken würde, so dass die Schwade 130 20 bis 30 cm von einer Längsachse des Zugfahrzeugs 10 nach rechts versetzt ist.

Wenn andererseits in Schritt 314 die Ballenformabweichung größer als der vorbestimmte Schwellenwert ist, wird Schritt 318 ausgeführt, gemäß dem das Zugfahrzeug 10, insbesondere der Lenkzylinder so gesteuert wird, dass der Versatz - D größer als ΔBreite/2 - x cm und kleiner wird als ΔBreite/2 + x cm, mit 1 cm ≤ x ≤ 15 cm, bevorzugt 3 cm ≤ x ≤ 8 cm, besonders bevorzugt x = 5 cm. Nun wird das Zugfahrzeug 10 nach rechts gelenkt, so dass er auf die linke Seite der Schwade gelangt, da D negativ ist. Mit den Zahlen aus dem obigen Beispiel würde das Zugfahrzeug 10 20 bis 30 cm zur rechten Seite der Schwade 130 gelenkt werden. Nach den Schritten 316 und 318 wird Schritt 302 erneut durchgeführt.

Der Traktor wird somit in relativ großen Kurven entlang der Schwade 130 gelenkt, so dass der Schwade 130 abwechselnd nahe dem linken und rechten Ende der Aufnahmeeinheit 126 eintritt, um eine zylindrische Ballenform zu erhalten, aber kein Erntegut auf dem Feld verbleibt.

Die Schleppersteuerung 60 könnte auch überprüfen, ob die Schwade 130 gekrümmt ist, und wenn dies der Fall ist, den Versatz D entsprechend anpassen, indem positive Werte erhöht und negative Werte verringert werden, wenn nach rechts gedreht wird, und umgekehrt, wenn nach links gedreht wird. Wenn die Zugfahrzeugsteuereinheit 60 nicht in der Lage wäre, zufriedenstellende Informationen über die Schwade 130 zu berechnen, könnte der Bediener akustisch und/oder über eine auf der Ein- und Ausgabeeinheit 74 gezeigte Nachricht gewarnt, dass er selbst lenken muss und vorzugsweise das Zugfahrzeug 10 würde auch automatisch anhalten, es sei denn, der Fahrer übernimmt das Lenken. Jede signifikante Aktion an einem Lenkrad des Zugfahrzeugs 10 würde auch die automatische Lenkfunktion deaktivieren.

## Patentansprüche

1. Verfahren zum Betrieb einer Kombination aus einem Zugfahrzeug (10) und einer Ballenpresse (12), und die Kombination eine Ein- und Ausgabeeinheit (74) und eine Zugfahrzeugsteuereinheit (60) und eine Ballenpressensteuereinheit (110) umfasst, wobei die Zugfahrzeugsteuereinheit (60) mit der Ein- und Ausgabeeinheit (74) und der Ballenpressensteuereinheit (110) verbunden ist, und die Ballenpresse (12) mit dem Zugfahrzeug (10) verbunden ist, wobei das Zugfahrzeug (10) einen Antriebsmotor (36) umfasst, welcher mit einer Antriebswelle (56) der Ballenpresse (12) verbunden ist, und die Ballenpresse (12) eine Aufnahmeeinheit (126) zur Aufnahme von Erntegut und eine Ballenpresskammer (112) umfasst, um das aufgenommene Erntegut zu einem Ballen zu pressen, wobei mit der Ein- und Ausgabeeinheit (74) ein Anpassungssignal generiert und an die Zugfahrzeugsteuereinheit (60) gesendet wird,
**dadurch gekennzeichnet, dass**
die Zugfahrzeugsteuereinheit (60) eine Antriebsdrehzahl der Antriebswelle (56) der Ballenpresse (12) anpasst, wenn die Zugfahrzeugsteuereinheit (60) das Anpassungssignal empfängt.

2. Verfahren nach Anspruch 1, **dadurch gekennzeichnet, dass** die Ballenpresse einen Ballensensor (144) umfasst, wobei mit dem Ballensensor (144) eine Grösse eines Ballens in der Ballenpresskammer (112) erfasst wird, und die Ballenpressensteuereinheit (110) mit dem Ballensensor (144) verbunden ist, wobei die Ballenpressensteuereinheit (110) die Grösse des Ballens in Form eines Ballensignals vom Ballensensor (144) empfängt.

3. Verfahren nach Anspruch 2, **dadurch gekennzeichnet, dass** die Ballenpressensteuereinheit (110) der Ein- und Ausgabeeinheit (74) das Ballensignal sendet, und die Ein- und Ausgabeeinheit (74) mit dem empfangenen Ballensignal die Grösse des Ballens anzeigt, wobei das Anpassungssignal mit der Ein- und Ausgabeeinheit (74) in Abhängigkeit von der angezeigten Grösse des Ballens generiert und an die Zugfahrzeugsteuereinheit (60) gesendet wird.

4. Verfahren nach mindestens einem der vorangehenden Ansprüche, **dadurch gekennzeichnet, dass** die Ballenpressensteuereinheit (110) der Zugfahrzeugsteuereinheit (60) und/oder der Ein- und Ausgabeeinheit (74), insbesondere über die Zugfahrzeugsteuereinheit (60), ein Haltesignal sendet, wenn das Ballensignal des Ballensensors (144) anzeigt, dass ein Ballen eine Grösse erreicht hat, die grösser oder gleich einer ersten vorbestimmten Grösse ist, wobei die Zugfahrzeugsteuereinheit (60) das Haltesignal anzeigt und/oder das Haltesignal mit der Ein- und Ausgabeeinheit (74) angezeigt wird, und das Anpassungssignal mit der Ein- und Ausgabeeinheit (74) in Abhängigkeit vom Haltesignal generiert und an die Zugfahrzeugsteuereinheit (60) gesendet wird.

5. Verfahren nach mindestens einem der vorangehenden Ansprüche, **dadurch gekennzeichnet, dass**, ein Bremsvorgang zum Stoppen der Kombination (1), insbesondere des Zugfahrzeugs (10), eingeleitet wird.

6. Verfahren nach mindestens einem der vorangehenden Ansprüche, **dadurch gekennzeichnet, dass** mit der Zugfahrzeugsteuereinheit (60) eine Antriebsgeschwindigkeit des Zugfahrzeugs (10) eingestellt und/oder verstellt wird.

7. Verfahren nach mindestens einem der vorangehenden Ansprüche, **dadurch gekennzeichnet, dass** die Zugfahrzeugsteuereinheit (60) einen Bremsvorgang zum Stoppen des Zugfahrzeugs (10) einleitet, wenn die Zugfahrzeugsteuereinheit (60) das Anpassungssignal von der Ein- und Ausgabeeinheit (74) empfängt.

8. Verfahren nach mindestens einem der vorangehenden Ansprüche, **dadurch gekennzeichnet, dass** die Zugfahrzeugsteuereinheit (60) einen Bremsvorgang zum Stoppen des Zugfahrzeugs (10) einleitet und/oder eine Antriebsdrehzahl der Antriebswelle (56) der Ballenpresse (12) anpasst, wenn die Zugfahrzeugsteuereinheit (60) das Anpassungssignal von der Ein- und Ausgabeeinheit (74) und die Zugfahrzeugsteuereinheit (60) und/oder die Ein- und Ausgabeeinheit (74) das Haltesignal von der Ballenpressensteuereinheit (110) empfangen.

9. Verfahren nach mindestens einem der vorangehenden Ansprüche, **dadurch gekennzeichnet, dass** die Zugfahrzeugsteuereinheit (60) eine Erhöhung oder Verringerung der Antriebsdrehzahl der Antriebswelle (56) (veranlasst) einstellt und/oder verstellt, wenn die Zugfahrzeugsteuereinheit (60) das Anpassungssignal von der Ein- und Ausgabeeinheit (74) und/oder das Haltesignal von der Ballenpressensteuereinheit (110) empfängt.

10. Verfahren nach mindestens einem der vorangehenden Ansprüche, **dadurch gekennzeichnet, dass** das Zugfahrzeug (10) mit oder von der Zugfahrzeugsteuereinheit (60) gelenkt wird.

11. Verfahren nach mindestens einem der vorhergehenden Ansprüche, **dadurch gekennzeichnet, dass** die Kombination einen Schwadsensor (160) umfasst und die Zugfahrzeugsteuereinheit (60) das Zugfahrzeug (10) basierend auf den Signalen des Schwadsensors (160) entlang einer Schwade lenkt.

12. Verfahren nach mindestens einem der vorhergehenden Ansprüche, **dadurch gekennzeichnet, dass** die Ballenpresse (12) eine Wickelvorrichtung (146) zum Einwickeln des fertigen Ballens mit Wickelmaterial in der Ballenpresskammer (112) umfasst.

13. Verfahren nach mindestens einem der vorhergehenden Ansprüche, **dadurch gekennzeichnet, dass** die Zugfahrzeugsteuereinheit (60) derart betreibbar ist, dass die Kombination (1), insbesondere das Zugfahrzeug (10), mit einer Geschwindigkeit antreibbar ist, die einen vorbestimmten Durchsatz der Aufnahmeeinheit (126) der Ballenpresse (12) ergibt.

14. Verfahren nach einem der vorangehenden Ansprüche, **dadurch gekennzeichnet, dass** die Kombination (1) eine GPS-Vorrichtung (32) umfasst, wobei mit der GPS-Vorrichtung (32) Positionsdaten versendet und/oder empfangen werden.

15. Kombination aus einem Zugfahrzeug (10) und einer Ballenpresse (12), insbesondere zur Durchführung eines Verfahrens nach einem der Ansprüche 1 bis 14,
wobei die Kombination (1) eine Ein- und Ausgabeeinheit (74) und eine Zugfahrzeugsteuereinheit (60) und eine Ballenpressensteuereinheit (110) umfasst, und die Zugfahrzeugsteuereinheit (60) mit der Ein- und Ausgabeeinheit (74) und der Ballenpressensteuereinheit (110) verbunden ist, wobei die Ballenpresse (12) mit dem Zugfahrzeug (10) verbunden ist, und das Zugfahrzeug (10) einen Antriebsmotor (36) umfasst, welcher mit einer Antriebswelle (56) der Ballenpresse (12) verbunden ist, wobei die Ballenpresse (12) eine Aufnahmeeinheit (126) zur Aufnahme von Erntegut und eine Ballenpresskammer (112) umfasst, um das aufgenommene Erntegut zu einem Ballen zu pressen, wobei mittels oder mit der Ein- und Ausgabeeinheit (74), ein Anpassungssignal generierbar und an die Zugfahrzeugsteuereinheit (60) sendbar ist,
**dadurch gekennzeichnet, dass**
die Zugfahrzeugsteuereinheit (60) derart betreibbar ist, dass mit der Zugfahrzeugsteuereinheit (60) eine Antriebsdrehzahl der Antriebswelle (56) der Ballenpresse (12) anpassbar ist, wenn die Zugfahrzeugsteuereinheit (60) das Anpassungssignal empfängt.

## Claims

1. Method for operating a combination of a tractor (10) and a baler (12), and the combination comprises an input and output unit (74) and a tractor control unit (60) and a baler control unit (110), wherein the tractor control unit (60) is connected to the input and output unit (74) and to the baler control unit (110), and the baler (12) is connected to the tractor (10), wherein the tractor (10) comprises a drive motor (36) which is connected to a drive shaft (56) of the baler (12), and the baler (12) comprises a pick-up unit (126) for picking up crop and a baling chamber (112) in order to compress the picked-up crop to form a bale, wherein an adaptation signal is generated with the input and output unit (74) and sent to the tractor control unit (60),
**characterized in that**
the tractor control unit (60) adapts a driving rotational speed of the drive shaft (56) of the baler (12) when the tractor control unit (60) receives the adaptation signal.

2. Method according to Claim 1, **characterized in that** the baler comprises a bale sensor (144), wherein a size of a bale in the baling chamber (112) is sensed with the bale sensor (144), and the baler control unit (110) is connected to the bale sensor (144), wherein the baler control unit (110) receives the size of the bale in the form of a bale signal from the bale sensor (144).

3. Method according to Claim 2, **characterized in that** the baler control unit (110) sends the bale signal to the input and output unit (74), and the input and output unit (74) indicates the size of the bale with the received bale signal, wherein the adaptation signal is generated with the input and output unit (74) depending on the indicated size of the bale and sent to the tractor control unit (60).

4. Method according to at least one of the preceding claims, **characterized in that** the baler control unit (110) sends a stop signal to the tractor control unit (60) and/or to the input and output unit (74), in particular via the tractor control unit (60), when the bale signal of the bale sensor (144) indicates that a bale has reached a size which is greater than or equal to a first predetermined size, wherein the tractor control unit (60) displays the stop signal and/or the stop signal is displayed by the input and output unit (74), and the adaptation signal is generated with the input and output unit (74) depending on the stop signal and sent to the tractor control unit (60).

5. Method according to at least one of the preceding claims, **characterized in that** a braking operation for stopping the combination (1), in particular the tractor (10), is initiated.

6. Method according to at least one of the preceding claims, **characterized in that** a driving speed of the tractor (10) is set and/or adjusted with the tractor control unit (60).

7. Method according to at least one of the preceding claims, **characterized in that** the tractor control unit (60) initiates a braking operation for stopping the tractor (10) when the tractor control unit (60) receives the adaptation signal from the input and output unit (74).

8. Method according to at least one of the preceding claims, **characterized in that** the tractor control unit (60) initiates a braking operation for stopping the tractor (10) and/or adapts a driving rotational speed of the drive shaft (56) of the baler (12) when the tractor control unit (60) receives the adaptation signal from the input and output unit (74), and the tractor control unit (60) and/or the input and output unit (74) receive(s) the stop signal from the baler control unit (110).

9. Method according to at least one of the preceding claims, **characterized in that** the tractor control unit (60) sets (initiates) and/or adjusts an increase or reduction in the driving rotational speed of the drive shaft (56) when the tractor control unit (60) receives the adaptation signal from the input and output unit (74) and/or the stop signal from the baler control unit (110).

10. Method according to at least one of the preceding claims, **characterized in that** the tractor (10) is steered with or by the tractor control unit (60).

11. Method according to at least one of the preceding claims, **characterized in that** the combination comprises a swath sensor (160) and the tractor control unit (60) steers the tractor (10) along a swath on the basis of the signals of the swath sensor (160).

12. Method according to at least one of the preceding claims, **characterized in that** the baler (12) comprises a wrapping device (146) for wrapping the finished bale with wrapping material in the baling chamber (112).

13. Method according to at least one of the preceding claims, **characterized in that** the tractor control unit (60) can be operated in such a manner that the combination (1), in particular the tractor (10), is driveable at a speed which produces a predetermined throughput of the pick-up unit (126) of the baler (12).

14. Method according to one of the preceding claims, **characterized in that** the combination (1) comprises a GPS device (32), wherein position data are sent and/or received with the GPS device (32).

15. Combination of a tractor (10) and a baler (12), in particular for carrying out a method according to one of Claims 1 to 14,
wherein the combination (1) comprises an input and output unit (74) and a tractor control unit (60) and a baler control unit (110), and the tractor control unit (60) is connected to the input and output unit (74) and to the baler control unit (110), wherein the baler (12) is connected to the tractor (10), and the tractor (10) comprises a drive motor (36) which is connected to a drive shaft (56) of the baler (12), wherein the baler (12) comprises a pick-up unit (126) for picking up crop and a baling chamber (112) in order to compress the picked-up crop to form a bale, wherein an adaptation signal can be generated by means of or with the input and output unit (74) and can be sent to the tractor control unit (60),
**characterized in that**
the tractor control unit (60) can be operated in such a manner that the tractor control unit (60) can be used to adapt a driving rotational speed of the drive shaft (56) of the baler (12) when the tractor control unit (60) receives the adaptation signal.

## Revendications

1. Procédé de fonctionnement d'une combinaison d'un tracteur (10) et d'une presse à balles (12), la combinaison comprenant une unité d'entrée et de sortie (74), une unité de commande de tracteur (60) et une unité de commande de presse à balles (110), l'unité de commande de tracteur (60) étant reliée à l'unité d'entrée et de sortie (74) et à l'unité de commande de presse à balles (110), et la presse à balles (12) étant reliée au tracteur (10), le tracteur (10) comprenant un moteur d'entraînement (36) qui est relié à un arbre d'entraînement (56) de la presse à balles (12), et la presse à balles (12) comprenant une unité de ramassage (126) pour le ramassage de la récolte et une chambre de presse à balles (112) pour le pressage de la récolte ramassée en une balle, l'unité d'entrée et de sortie (74) générant un signal d'ajustement et l'envoyant à l'unité de commande de tracteur (60),
**caractérisé en ce que**
l'unité de commande de tracteur (60) ajuste une vitesse de rotation de l'arbre d'entraînement (56) de la presse à balles (12) lorsque l'unité de commande de tracteur (60) reçoit le signal d'ajustement.

2. Procédé selon la revendication 1, **caractérisé en ce que** la presse à balles comprend un capteur de balle (144), une taille d'une balle dans la chambre de presse à balles (112) étant détectée au moyen du capteur de balle (144), et l'unité de commande de presse à balles (110) étant reliée au capteur de balle (144), l'unité de commande de presse à balles (110) recevant en provenance du capteur de balle (144) la taille de la balle sous la forme d'un signal de balle.

3. Procédé selon la revendication 2, **caractérisé en ce que** l'unité de commande de presse à balles (110) envoie à l'unité d'entrée et de sortie (74) le signal de balle, et **en ce que** l'unité d'entrée et de sortie (74) indique la taille de la balle à l'aide du signal de balle reçu, le signal d'ajustement étant généré au moyen de l'unité d'entrée et de sortie (74) en fonction de la taille de la balle indiquée et étant envoyé à l'unité de commande de tracteur (60).

4. Procédé selon au moins l'une des revendications précédentes, **caractérisé en ce que** l'unité de commande de presse à balles (110) envoie à l'unité de commande de tracteur (60) et/ou à l'unité d'entrée et de sortie (74), en particulier par l'intermédiaire de l'unité de commande de tracteur (60), un signal d'arrêt lorsque le signal de balle du capteur de balle (144) indique qu'une balle a atteint une taille supérieure ou égale à une première taille prédéterminée, l'unité de commande de tracteur (60) indiquant le signal d'arrêt et/ou le signal d'arrêt étant indiqué au moyen de l'unité d'entrée et de sortie (74), le signal d'ajustement étant généré au moyen de l'unité d'entrée et de sortie (74) en fonction du signal d'arrêt et étant envoyé à l'unité de commande de tracteur (60).

5. Procédé selon au moins l'une des revendications précédentes, **caractérisé en ce qu'**un processus de freinage est déclenché pour arrêter la combinaison (1), en particulier le tracteur (10).

6. Procédé selon au moins l'une des revendications précédentes, **caractérisé en ce qu'**une vitesse de déplacement du tracteur (10) est réglée et/ou ajustée au moyen de l'unité de commande de tracteur (60).

7. Procédé selon au moins l'une des revendications précédentes, **caractérisé en ce que** l'unité de commande de tracteur (60) déclenche un processus de freinage pour arrêter le tracteur (10) lorsque l'unité de commande de tracteur (60) reçoit le signal d'ajustement en provenance de l'unité d'entrée et de sortie (74).

8. Procédé selon au moins l'une des revendications précédentes, **caractérisé en ce que** l'unité de commande de tracteur (60) déclenche un processus de freinage pour arrêter le tracteur (10) et/ou ajuste une vitesse de rotation de l'arbre d'entraînement (56) de la presse à balles (12) lorsque l'unité de commande de tracteur (60) reçoit le signal d'ajustement en provenance de l'unité d'entrée et de sortie (74) et que l'unité de commande de tracteur (60) et/ou l'unité d'entrée et de sortie (74) reçoivent le signal d'arrêt en provenance de l'unité de commande de presse à balles (110).

9. Procédé selon au moins l'une des revendications précédentes, **caractérisé en ce que** l'unité de commande de tracteur (60) (déclenche) règle et/ou ajuste une augmentation ou une diminution de la vitesse de rotation de l'arbre d'entraînement (56) lorsque l'unité de commande de tracteur (60) reçoit le signal d'ajustement en provenance de l'unité d'entrée et de sortie (74) et/ou le signal d'arrêt en provenance de l'unité de commande de presse à balles (110).

10. Procédé selon au moins l'une des revendications précédentes, **caractérisé en ce que** le tracteur (10) est dirigé par ou depuis l'unité de commande de tracteur (60).

11. Procédé selon au moins l'une des revendications précédentes, **caractérisé en ce que** la combinaison comprend un capteur d'andain (160) et **en ce que** l'unité de commande de tracteur (60) dirige le tracteur (10) sur la base des signaux du capteur d'andain (160) le long d'un andain.

12. Procédé selon au moins l'une des revendications précédentes, **caractérisé en ce que** la presse à balles (12) comprend un dispositif d'enroulement (146) pour envelopper la balle finie de matériau d'enroulement dans la chambre de presse à balles (112).

13. Procédé selon au moins l'une des revendications précédentes, **caractérisé en ce que** l'unité de commande de tracteur (60) peut fonctionner de telle sorte que la combinaison (1), en particulier le tracteur (10), peut être entraînée à une vitesse qui conduit à un débit prédéterminé de l'unité de ramassage (126) de la presse à balles (12).

14. Procédé selon l'une des revendications précédentes, **caractérisé en ce que** la combinaison (1) comprend un dispositif GPS (32), des données de position étant émises et/ou reçues au moyen du dispositif GPS (32).

15. Combinaison d'un tracteur (10) et d'une presse à balles (12), en particulier pour la mise en œuvre d'un procédé selon l'une des revendications 1 à 14,
la combinaison (1) comprenant une unité d'entrée et de sortie (74), une unité de commande de tracteur (60) et une unité de commande de presse à balles (110), et l'unité de commande de tracteur (60) étant reliée à l'unité d'entrée et de sortie (74) et à l'unité de commande de presse à balles (110), la presse à balles (12) étant reliée au tracteur (10), et le tracteur (10) comprenant un moteur d'entraînement (36) relié à un arbre d'entraînement (56) de la presse à balles (12), la presse à balles (12) comprenant une unité de ramassage (126) pour le ramassage de la récolte et une chambre de presse à balles (112) pour le pressage de la récolte ramassée en une balle, un signal d'ajustement pouvant être généré au moyen de l'unité d'entrée et de sortie (74) et envoyé à l'unité de commande de tracteur (60),
**caractérisé en ce que**
l'unité de commande de tracteur (60) peut être exploitée de telle sorte qu'une vitesse de rotation de l'arbre d'entraînement (56) de la presse à balles (12) peut être ajustée au moyen de l'unité de commande de tracteur (60) lorsque l'unité de commande de tracteur (60) reçoit le signal d'ajustement.
